(19) **Europäisches Patentamt / European Patent Office / Office européen des brevets**

(11) **EP 4 607 964 A1**

(12) **EUROPEAN PATENT APPLICATION**
published in accordance with Art. 153(4) EPC

(43) Date of publication:
**27.08.2025 Bulletin 2025/35**

(21) Application number: **23879597.5**

(22) Date of filing: **03.10.2023**

(51) International Patent Classification (IPC):
***H04S 7/00*** *(2006.01)*

(52) Cooperative Patent Classification (CPC):
**H04S 7/00**

(86) International application number:
**PCT/JP2023/036007**

(87) International publication number:
**WO 2024/084950 (25.04.2024 Gazette 2024/17)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **19.10.2022 US 202263417389 P**
**06.04.2023 US 202363457495 P**

(71) Applicant: **Panasonic Intellectual Property Corporation of America**
**Torrance, CA 90504 (US)**

(72) Inventors:
• **USAMI, Hikaru**
**Kadoma-shi, Osaka 571-0057 (JP)**

• **ISHIKAWA, Tomokazu**
**Kadoma-shi, Osaka 571-0057 (JP)**
• **EHARA, Hiroyuki**
**Kadoma-shi, Osaka 571-0057 (JP)**
• **NAKAHASHI, Kota**
**Kadoma-shi, Osaka 571-0057 (JP)**
• **ENOMOTO, Seigo**
**Kadoma-shi, Osaka 571-0057 (JP)**
• **YAMADA, Mariko**
**Kadoma-shi, Osaka 571-0057 (JP)**
• **MIYASAKA, Shuji**
**Neyagawa-shi, Osaka 572-0004 (JP)**

(74) Representative: **Novagraaf International SA**
**Chemin de l'Echo 3**
**1213 Onex, Geneva (CH)**

(54) **ACOUSTIC SIGNAL PROCESSING METHOD, COMPUTER PROGRAM, AND ACOUSTIC SIGNAL PROCESSING DEVICE**

(57) An acoustic signal processing method includes: obtaining sound data indicating a waveform of a reference sound; processing the sound data to change at least one of a frequency component, a phase, or an amplitude value of the waveform based on simulated information in which variation of a natural phenomenon is simulated; and outputting the processed sound data.

EP 4 607 964 A1

# FIG. 14

START

S10

Accept input operation indicating that simulated information is smooth function in which variation of wind speed has been simulated

S20

Obtain sound data indicating waveform of reference sound (aerodynamic sound generated by wind)

S30

Determine, as simulated information in which variation due to natural phenomena has been simulated, smooth function in which variation of wind speed has been simulated

S40

Process sound data to change at least one of frequency component, phase, or amplitude value of waveform based on value (ratio) indicated by smooth function

S50

Output processed sound data

END

**Description**

[Technical Field]

The present disclosure relates to an acoustic signal processing method, etc.

[Background Art]

Patent Literature (PTL) 1 discloses a technique for outputting images and sound to create a realistic virtual space. In PTL 1, a technique is disclosed that changes the sound of wind in accordance with changes in wind strength in the virtual space.

[Citation List]

[Patent Literature]

[PTL 1] Japanese Unexamined Patent Application Publication No. 1998-2151162
[PTL 2] International Patent Application Publication No. 2021/180938

[Non Patent Literature]

[NPL 1] Yoshinori Dobashi, et al., Real-time rendering of aerodynamic sound using sound textures based on computational fluid dynamics, ACM Transactions on Graphics, Vol. 22, No. 3, p732-740

[Summary of Invention]

[Technical Problem]

With the technique disclosed in PTL 1, it may be difficult to provide a sense of realism to the listener.
In view of this, the present disclosure has an object to provide, for instance, an acoustic signal processing method capable of providing a listener with a sense of realism.

[Solution to Problem]

An acoustic signal processing method according to one aspect of the present disclosure includes: obtaining sound data indicating a waveform of a reference sound; processing the sound data to change at least one of a frequency component, a phase, or an amplitude value of the waveform based on simulated information in which variation of a natural phenomenon is simulated; and outputting the sound data processed.
A computer program according to one aspect of the present disclosure is for causing a computer to execute the acoustic signal processing method described above.
An acoustic signal processing device according to one aspect of the present disclosure includes: an obtainer that obtains sound data indicating a waveform of a reference sound; a processor that processes the sound data to change at least one of a frequency component, a phase, or an amplitude value of the waveform based on simulated information in which variation of a natural phenomenon is simulated; and an outputter that outputs the sound data processed.
Note that these general or specific aspects may be implemented using a system, a device, a method, an integrated circuit, a computer program, or a non-transitory computer-readable recording medium such as CD-ROM, or any combination thereof.

[Advantageous Effects of Invention]

An acoustic signal processing method according to one aspect of the present disclosure is capable of providing a listener with a sense of realism.

[Brief Description of Drawings]

[FIG. 1]

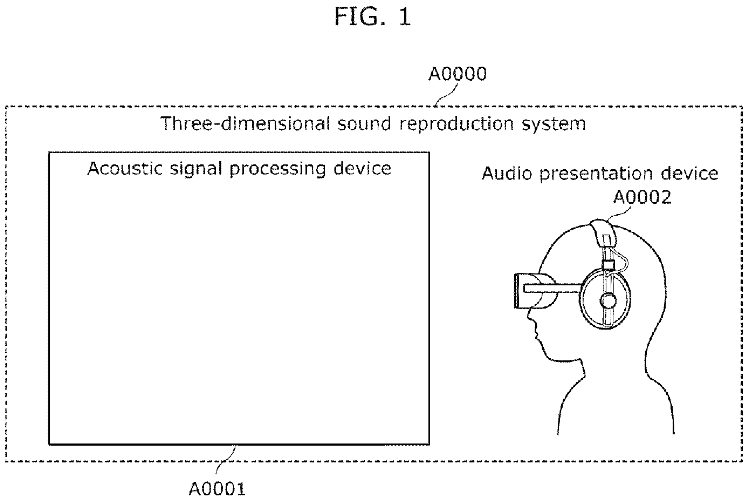

FIG. 1 illustrates a three-dimensional sound (immersive audio) reproduction system as one example of a system to which acoustic processing or decoding processing according to the present disclosure is applicable.
[FIG. 2]

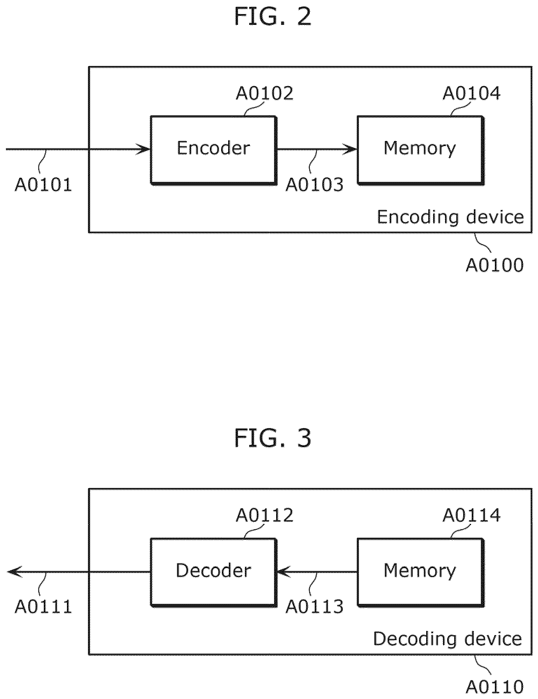

FIG. 2 is a functional block diagram illustrating the configuration of one example of an encoding device of the present disclosure.
[FIG. 3]
FIG. 3 is a functional block diagram illustrating the configuration of one example of a decoding device of the present disclosure.
[FIG. 4]

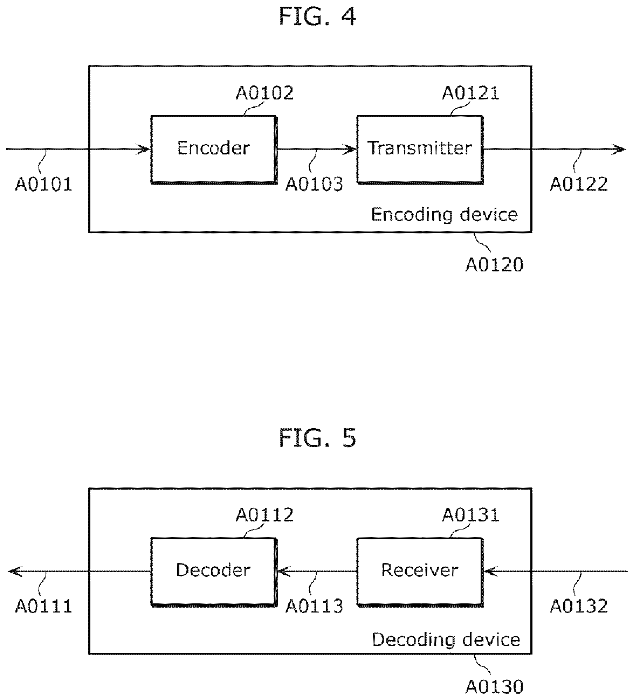

FIG. 4 is a functional block diagram illustrating the configuration of another example of an encoding device of the present disclosure.
[FIG. 5]
FIG. 5 is a functional block diagram illustrating the configuration of another example of a decoding device of the present disclosure.
[FIG. 6]

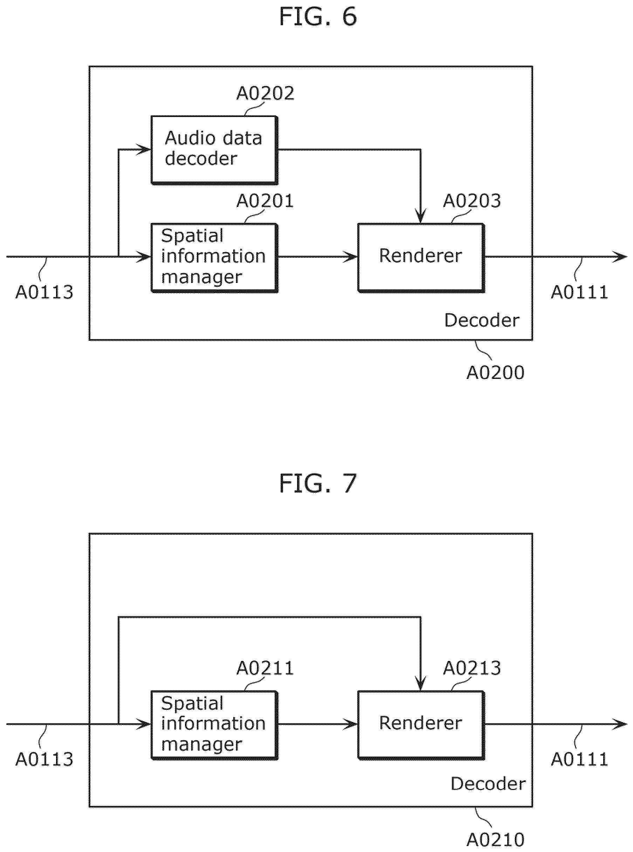

FIG. 6 is a functional block diagram illustrating the configuration of one example of the decoder in FIG. 3 or FIG. 5.
[FIG. 7]
FIG. 7 is a functional block diagram illustrating the configuration of another example of the decoder in FIG. 3 or FIG. 5.
[FIG. 8]

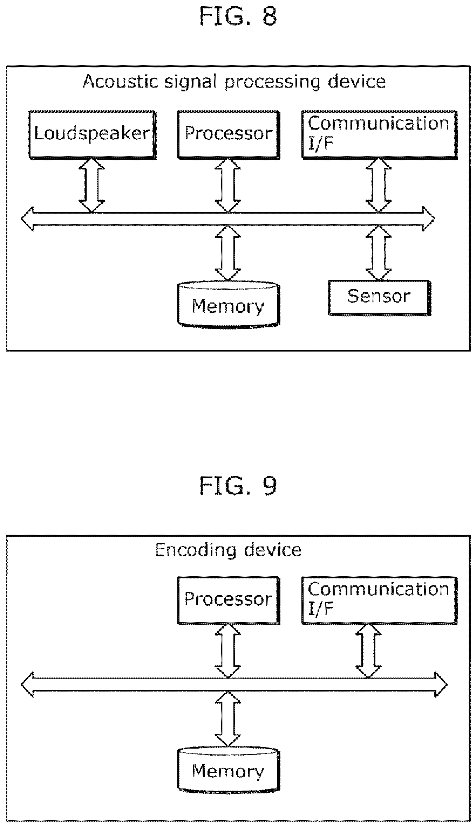

FIG. 8 illustrates one example of a physical configuration of an acoustic signal processing device.
[FIG. 9]
FIG. 9 illustrates one example of a physical configuration of an encoding device.
[FIG. 10]

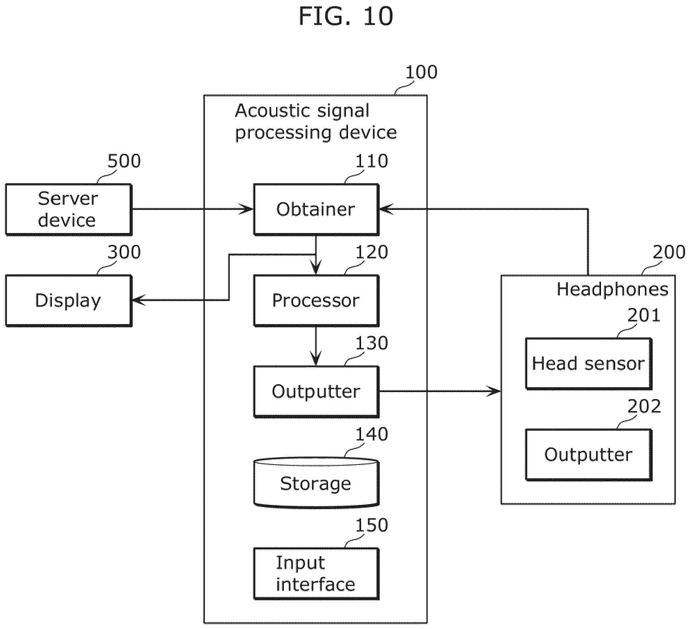

FIG. 10 is a block diagram illustrating a functional configuration of an acoustic signal processing device according to Embodiment 1.
[FIG. 11]

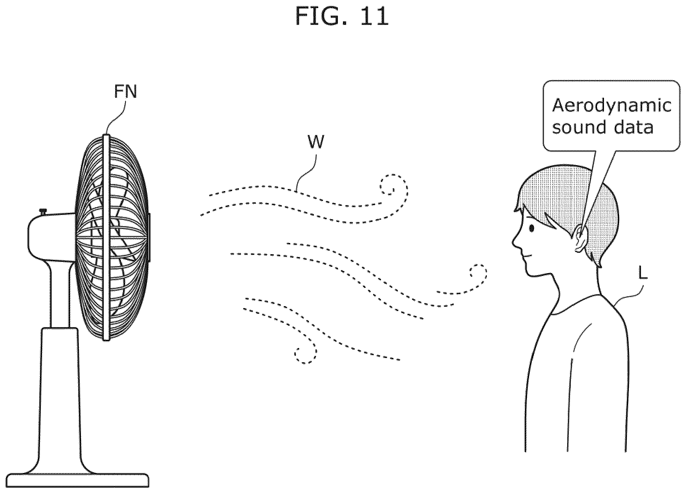

FIG. 11 illustrates an electric fan, which is one example of an object according to Embodiment 1, and a listener.
[FIG. 12]

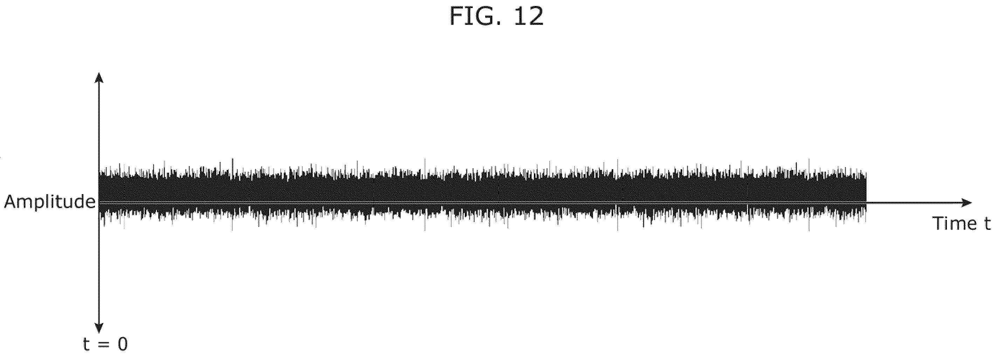

FIG. 12 illustrates sound data according to Embodiment 1.
[FIG. 13]

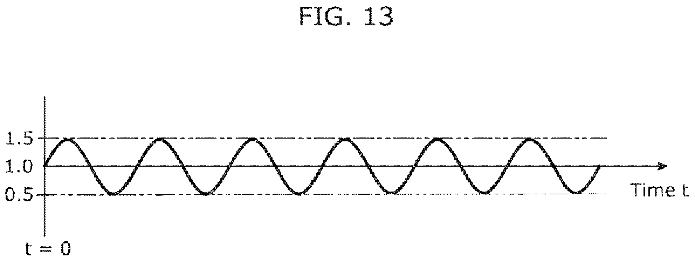

FIG. 13 illustrates one example of a smooth function according to Embodiment 1.
[FIG. 14]

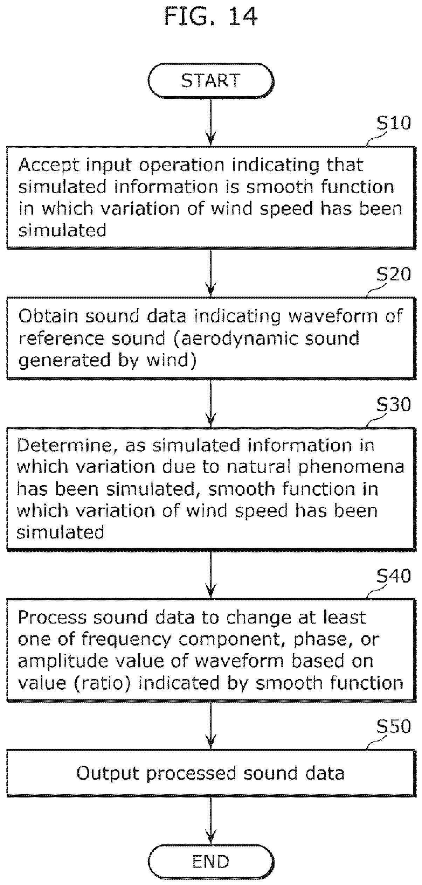

FIG. 14 is a flowchart of Operation Example 1 performed by an acoustic signal processing device according to Embodiment 1.
[FIG. 15]

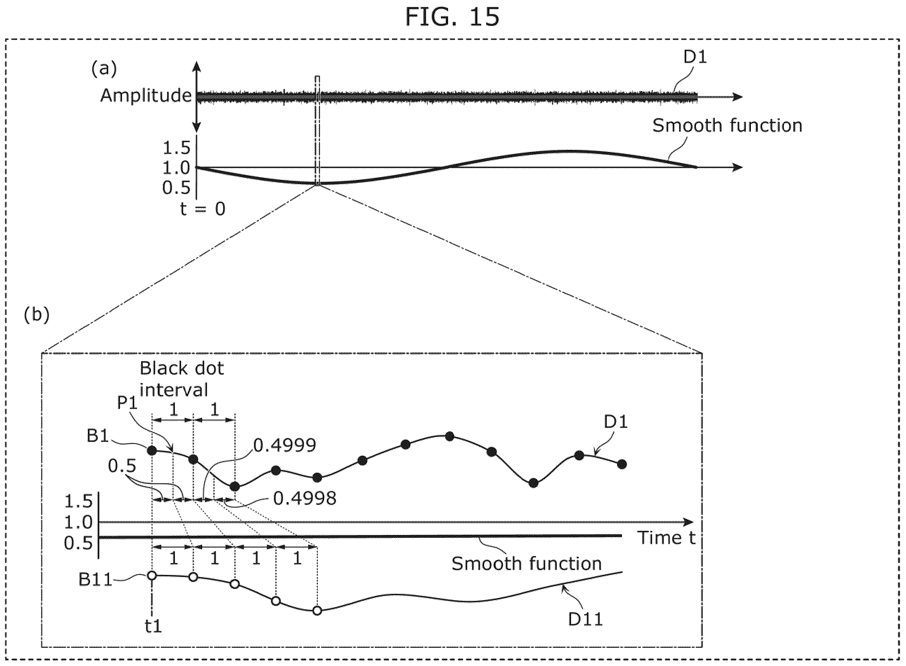

FIG. 15 is for explaining processing performed by a processor according to Embodiment 1.
[FIG. 16]

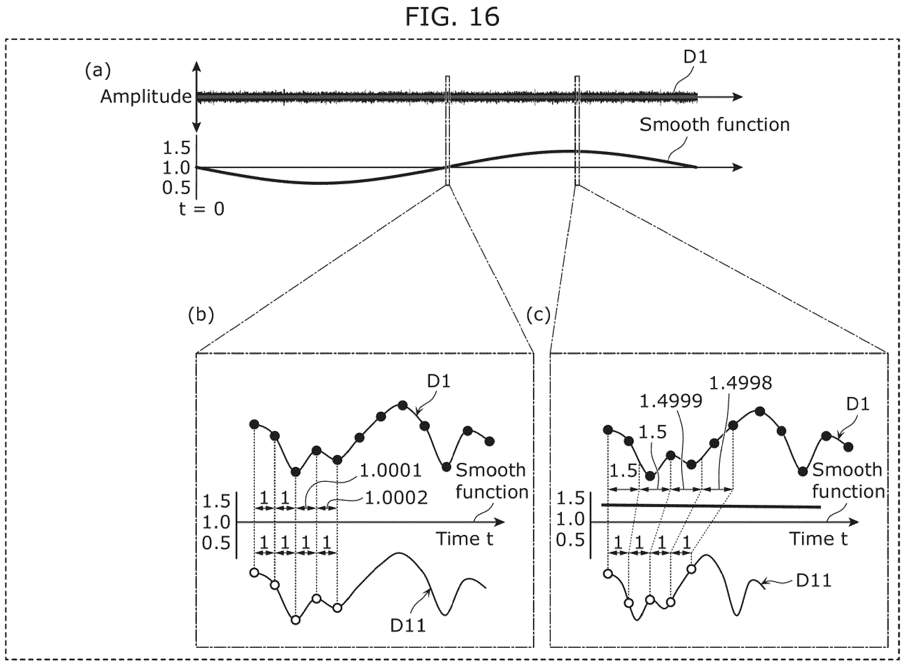

FIG. 16 is another diagram for explaining processing performed by a processor according to Embodiment 1.
[FIG. 17]

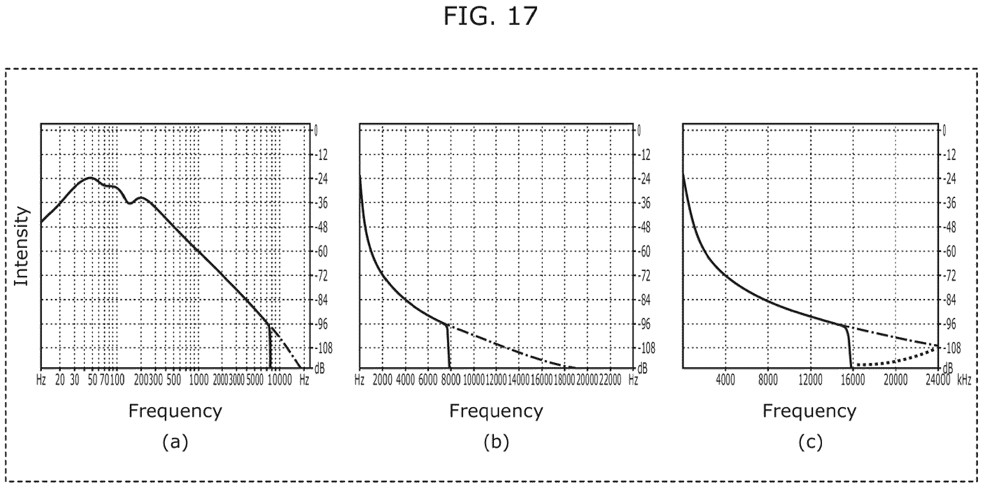

FIG. 17 illustrates sound data (aerodynamic sound data) according to Embodiment 1.
[FIG. 18]

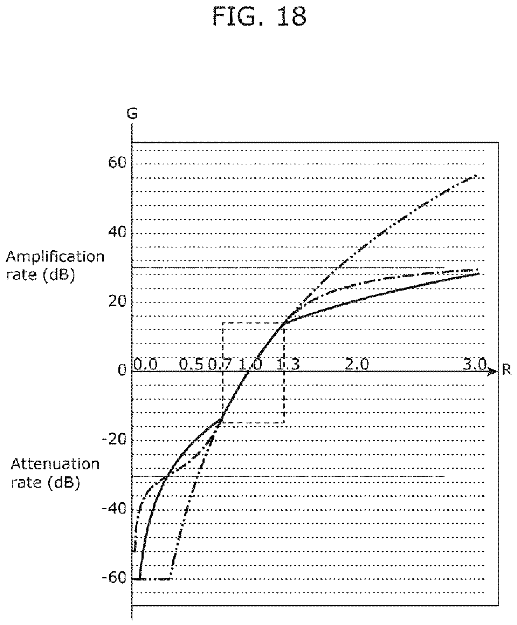

FIG. 18 illustrates a value R indicated by a smooth function according to Embodiment 1, and an amplification rate and attenuation rate of loudness of aerodynamic sound.
[FIG. 19]

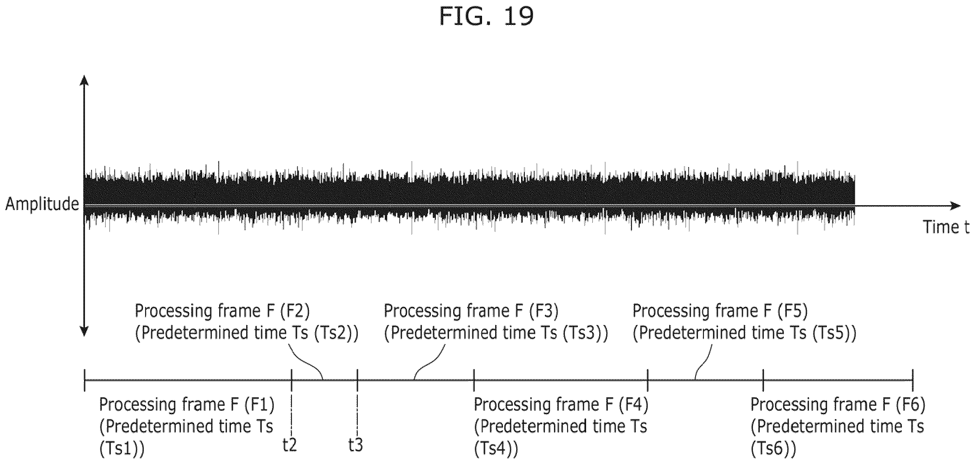

FIG. 19 illustrates divided aerodynamic sound data according to Embodiment 1.
[FIG. 20]

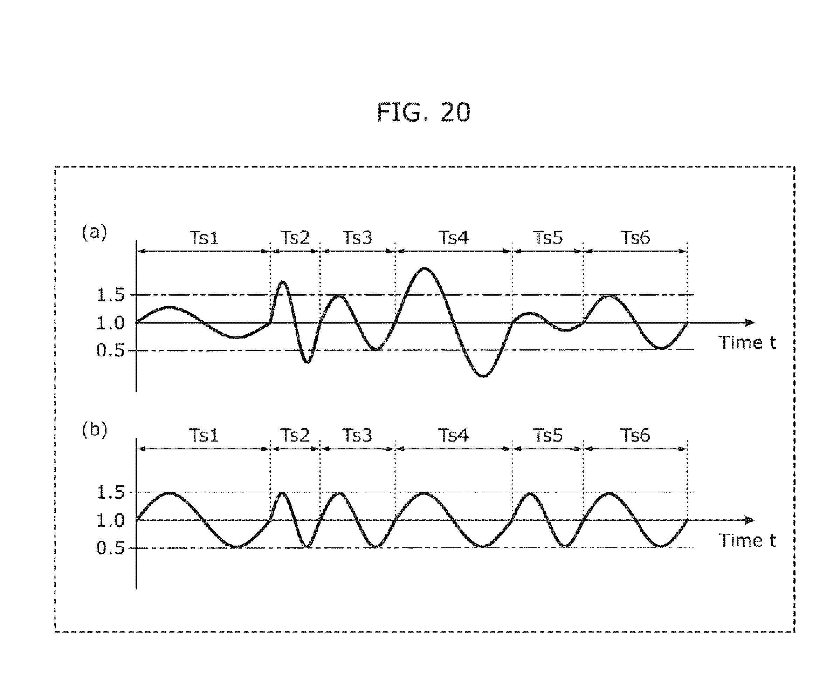

FIG. 20 illustrates other examples of two smooth functions according to Embodiment 1.
[FIG. 21]

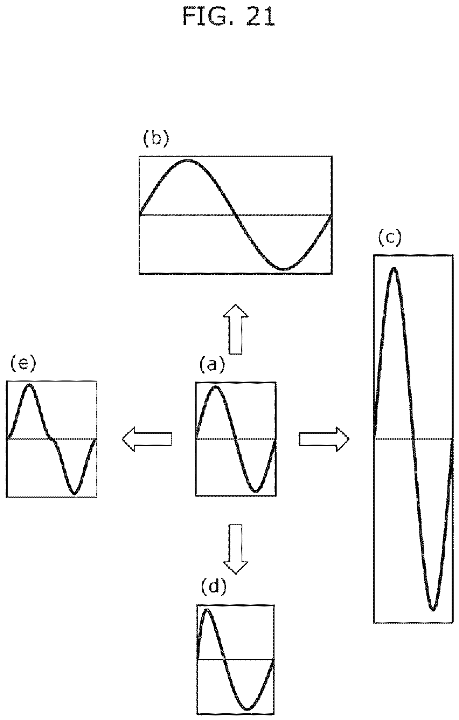

FIG. 21 illustrates an example where parameters for specifying a smooth function according to Embodiment 1 have changed.
[FIG. 22]

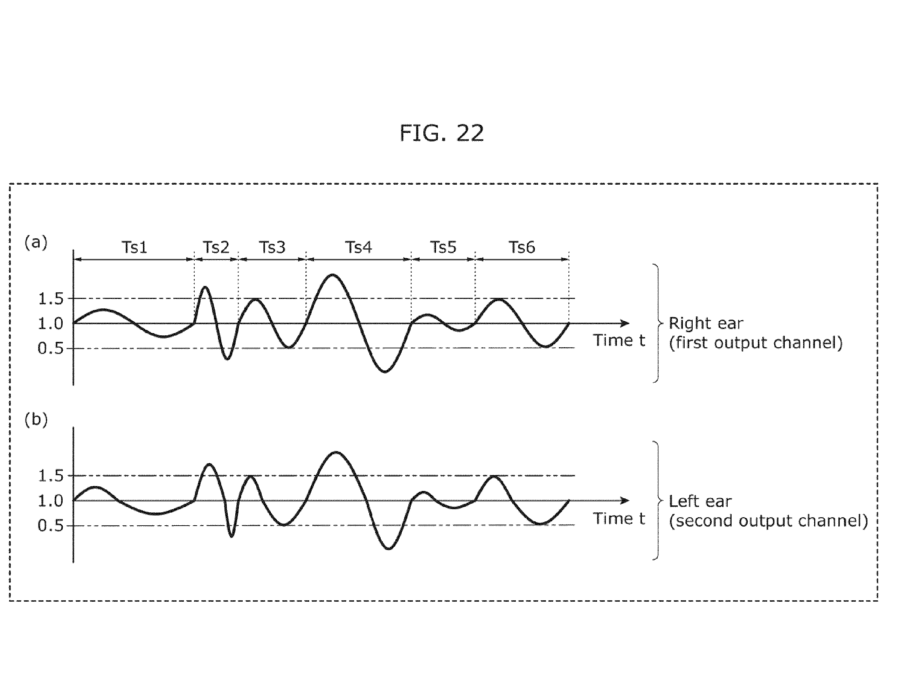

FIG. 22 illustrates other examples of two smooth functions according to Embodiment 1.
[FIG. 23]

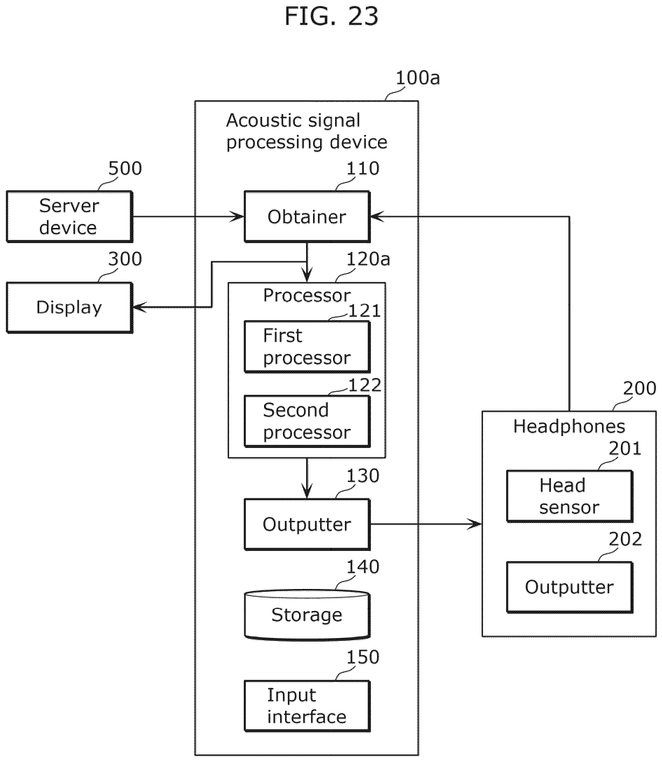

FIG. 23 is a block diagram illustrating a functional configuration of an acoustic signal processing device according to a variation of the present disclosure.
[FIG. 24]

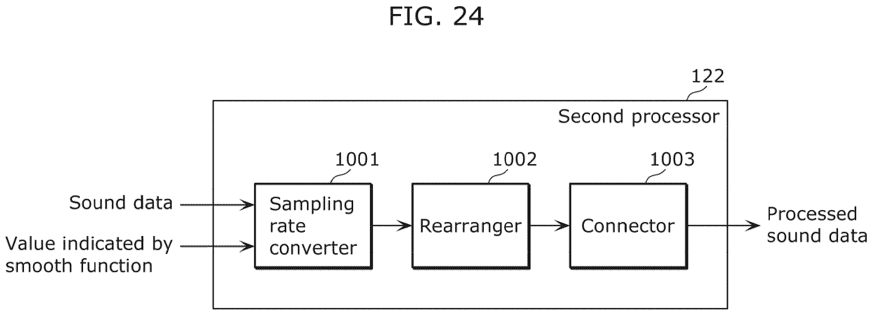

FIG. 24 is a block diagram illustrating a functional configuration of a second processor according to a variation of the present disclosure.
[FIG. 25]

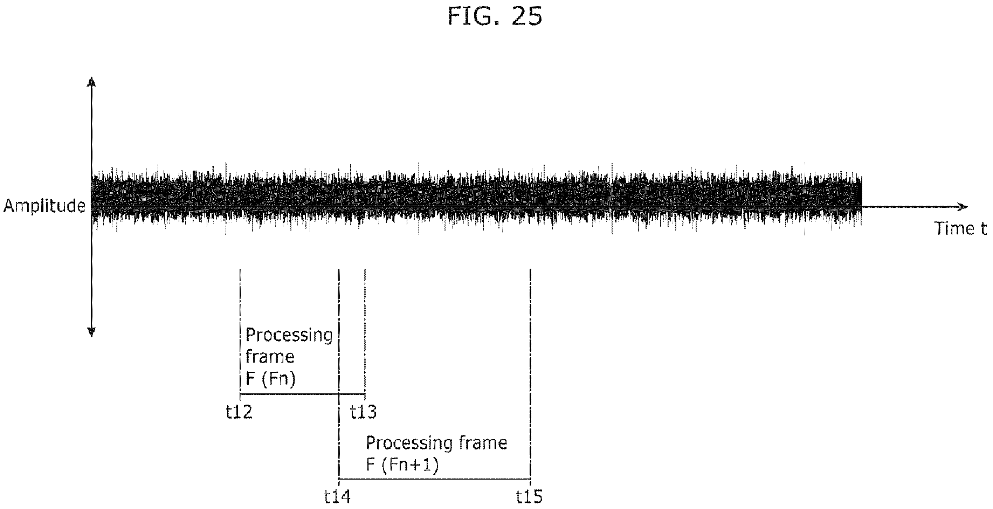

FIG. 25 illustrates aerodynamic sound data according to a variation of the present disclosure.
[FIG. 26]

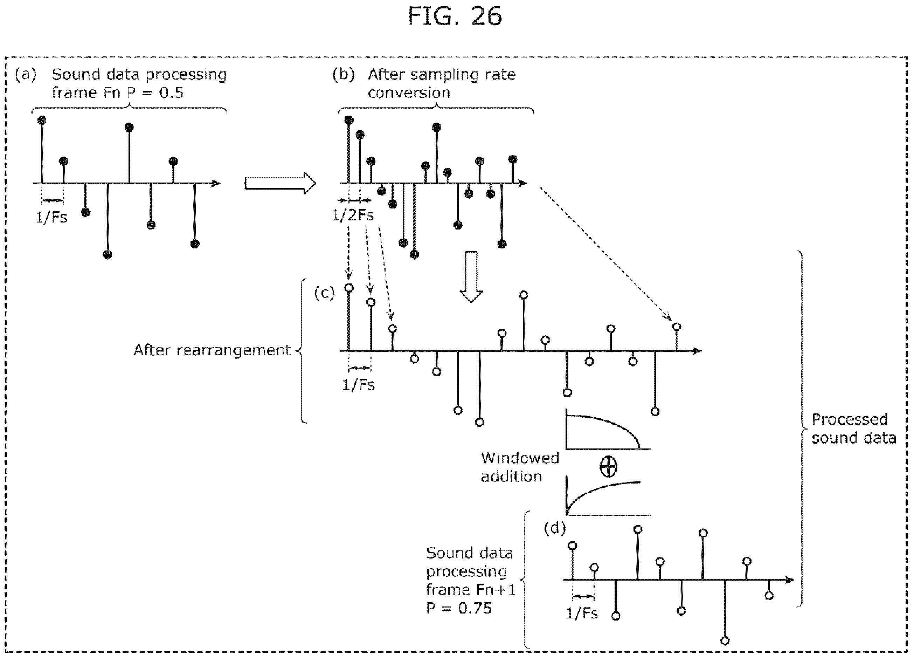

FIG. 26 is a conceptual diagram of processing performed by a second processor according to a variation of the present disclosure.
[FIG. 27]

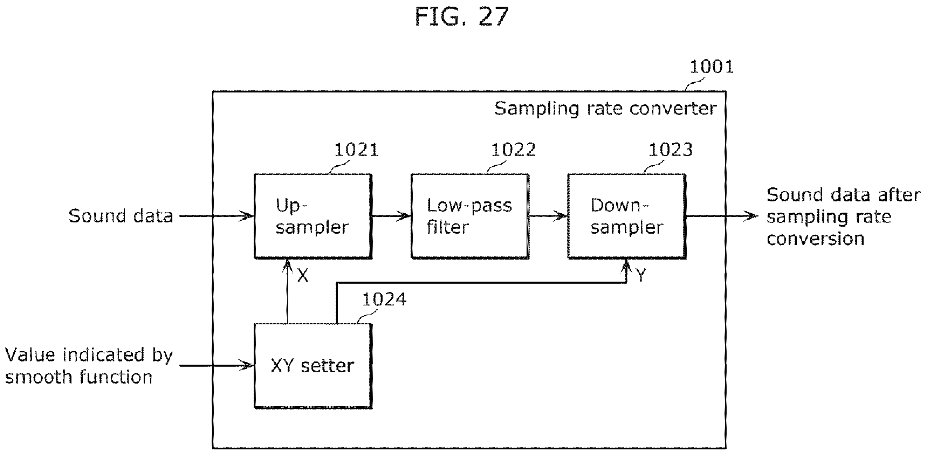

FIG. 27 is a block diagram illustrating the functional configuration of a sampling rate converter according to a variation of the present disclosure.
[FIG. 28]

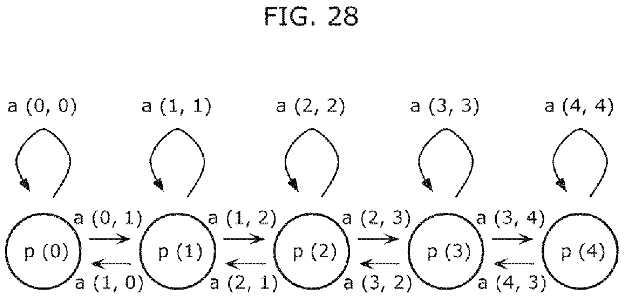

FIG. 28 is a state transition diagram of values indicated by a smooth function according to a variation of the present disclosure.
[FIG. 29]

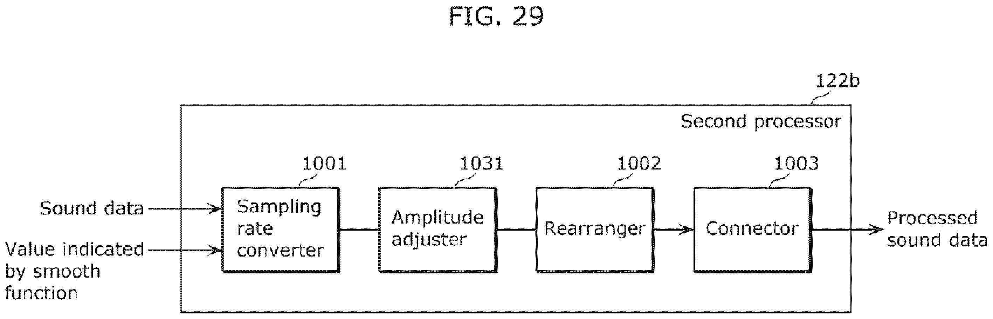

FIG. 29 is a block diagram illustrating another functional configuration of an acoustic signal processing device according to a variation of the present disclosure.
[FIG. 30]

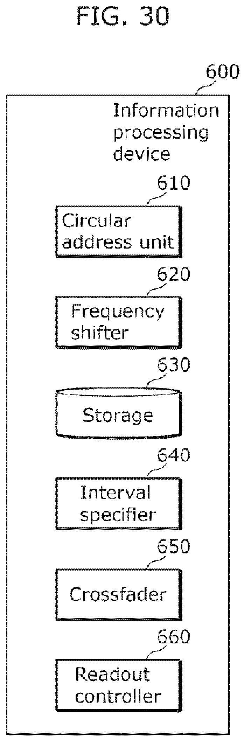

FIG. 30 is a block diagram illustrating a functional configuration of an information processing device according to Embodiment 2.
[FIG. 31]

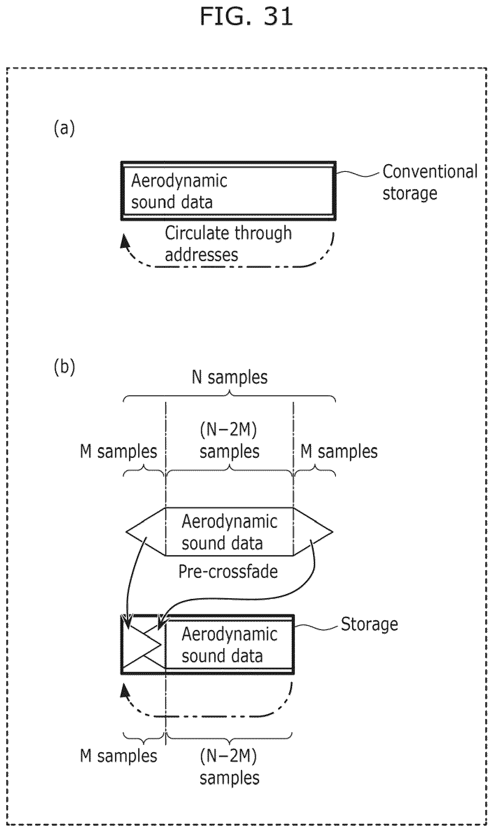

FIG. 31 is a diagram for explaining the readout of sound data according to a conventional technique and the readout of sound data according to Embodiment 2.
[FIG. 32]

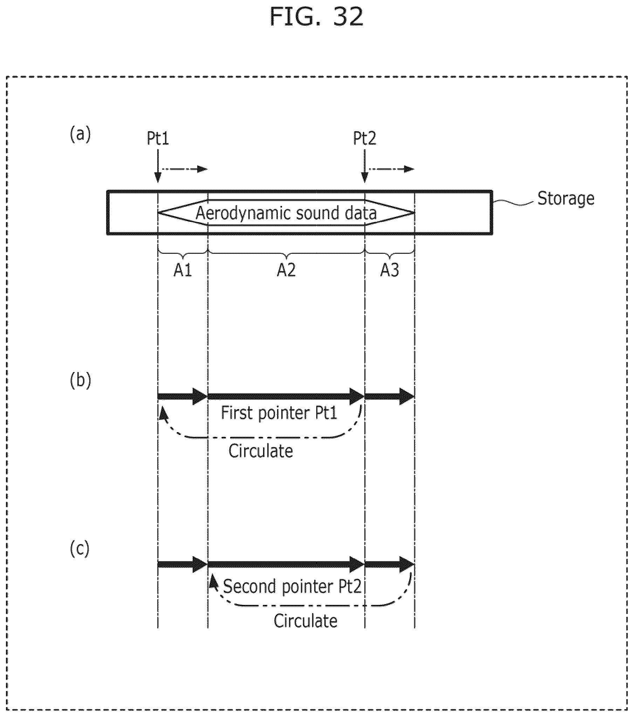

FIG. 32 is for explaining processing performed by an information processing device according to Embodiment 2.
[FIG. 33]

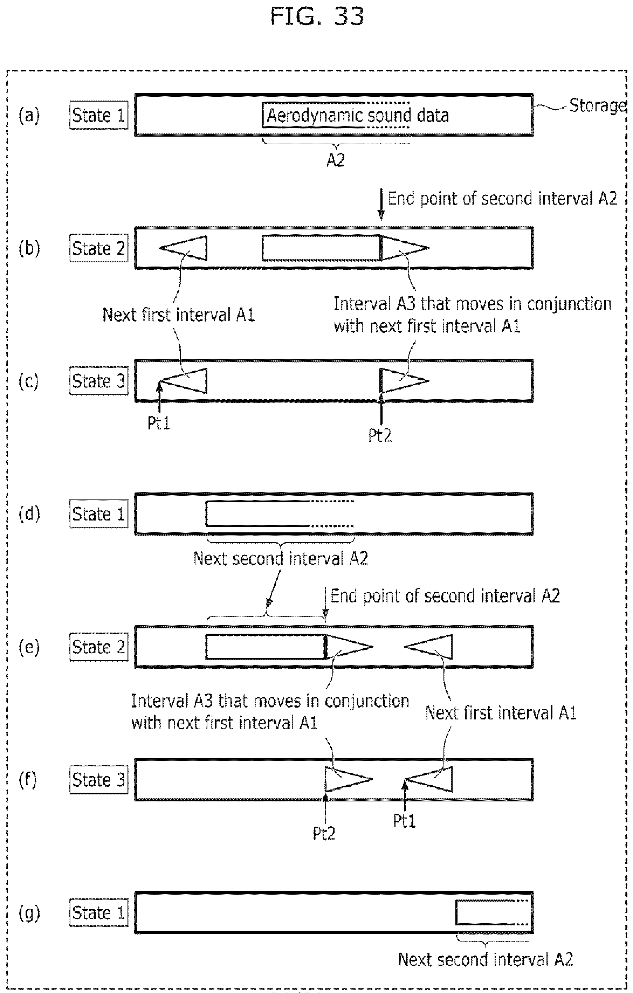

FIG. 33 is for explaining other processing performed by an information processing device according to Embodiment 2.
[FIG. 34]

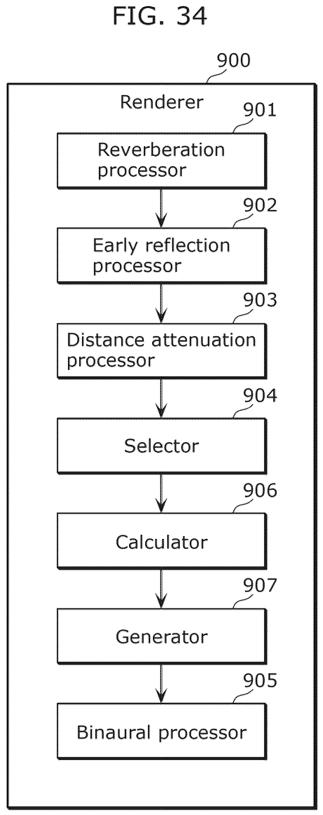

FIG. 34 illustrates one example of a functional block diagram and steps for explaining a case where the renderers of FIG. 6 and FIG. 7 perform pipeline processing.

[Description of Embodiments]

Underlying Knowledge Forming Basis of the Present Disclosure

PTL 1 discloses a technique for outputting images and sound to create a realistic virtual space. In PTL 1, a technique is disclosed that changes the sound of wind in accordance with changes in wind strength in the virtual space.
A virtual space is, for example, a space where a user (listener) is present, such as a virtual reality (VR) or augmented reality (AR) space. The sound of wind produced using the technique disclosed in PTL 1 is utilized in applications for reproducing stereophonic sound in such a virtual space. Such sounds subjected to this control are utilized particularly in a virtual space where information of six degrees of freedom (6DoF) of the listener is sensed. Natural phenomena such as wind blowing are reproduced in the virtual space when the technique of PTL 1 is used.
In real space, variations in natural phenomena include fluctuations. Natural phenomena in real space are, for example, wind blowing, river water flowing, and animal activity. For example, variations in natural phenomena include variations in wind speed or variations in wind direction, and variations in wind speed or variations in wind direction contain fluctuations within them.
However, in the technique disclosed in PTL 1, while it is possible to allow the listener to hear the sound of wind, this wind sound cannot reproduce the sound of wind in real space that includes fluctuations. Accordingly, when the listener hears such wind sound, the listener feels a sense of incongruity and it is difficult for the listener to experience a sense of realism. Therefore, there is a demand for an acoustic signal processing method and the like capable of providing a listener with a sense of realism.
An acoustic signal processing method according to a first aspect of the present disclosure includes: obtaining sound data indicating a waveform of a reference sound; processing the sound data to change at least one of a frequency component, a phase, or an amplitude value of the waveform based on simulated information in which variation of a natural phenomenon is simulated; and outputting the sound data processed.
As a result, the sound data is processed to change at least one of the frequency component, phase, or amplitude value of the waveform, based on simulated information in which variation of natural phenomena including fluctuations is simulated. Therefore, in the processed sound data, fluctuations occur in at least one of the frequency component, phase, or amplitude, and fluctuations also occur in at least one of the frequency component, phase, or amplitude of the sound indicated by the processed sound data. Accordingly, the listener is able to hear sound in which fluctuations occur in at least one of the frequency component, phase, or amplitude value, making it less likely for the listener to feel a sense of incongruity and allowing the listener to experience a sense of realism. Stated differently, an acoustic signal processing method capable of providing a listener with a sense of realism is realized.

An acoustic signal processing method according to a second aspect of the present disclosure is the acoustic signal processing method according to the first aspect, wherein the reference sound is an aerodynamic sound generated by wind, and in the processing, the sound data is processed to change at least one of the frequency component, the phase, or the amplitude value of the waveform based on the simulated information in which variation of wind speed of the wind is simulated.

With this, the listener is able to hear aerodynamic sound in which fluctuations occur in at least one of the frequency component, phase, or amplitude, making it less likely for the listener to feel a sense of incongruity and allowing the listener to experience a sense of realism. Stated differently, an acoustic signal processing method capable of providing a listener with a sense of realism is realized.

An acoustic signal processing method according to a third aspect of the present disclosure is the acoustic signal processing method according to the second aspect, wherein the processing includes: determining, as the simulated information, a smooth function in which variation of the wind speed of the wind is simulated; and processing the sound data to change at least one of the frequency component, the phase, or the amplitude value of the waveform based on a value indicated by the smooth function determined.

This allows for the sound data to be processed based on the value indicated by the smooth function.

An acoustic signal processing method according to a fourth aspect of the present disclosure is the acoustic signal processing method according to the third aspect, wherein the value indicated by the smooth function is information indicating a ratio between a wind speed of the aerodynamic sound as the reference sound and a wind speed of the aerodynamic sound indicated by the sound data after being processed in the processing.

This allows for the sound data to be processed based on the ratio between the wind speed of the aerodynamic sound as the reference sound and the wind speed of the aerodynamic sound indicated by the sound data after processing.

An acoustic signal processing method according to a fifth aspect of the present disclosure is the acoustic signal processing method according to the fourth aspect, wherein in the processing, the smooth function is so determined as to irregularly change a parameter specifying the smooth function.

With this, the listener is able to hear aerodynamic sound in which irregularly changing fluctuations occur in at least one of the frequency component, phase, or amplitude, making it even less likely for the listener to feel a sense of incongruity and allowing the listener to experience an even greater sense of realism. Stated differently, an acoustic signal processing method capable of providing a listener with a greater sense of realism is realized.

An acoustic signal processing method according to a sixth aspect of the present disclosure is the acoustic signal processing method according to any one of the third to fifth aspects, wherein in the processing, the sound data is processed to shift the frequency component of the waveform to a frequency proportional to the value indicated by the smooth function determined.

With this, the listener is able to hear sound in which fluctuations occur in the frequency component, making it less likely for the listener to feel a sense of incongruity and allowing the listener to experience a sense of realism. Stated differently, an acoustic signal processing method capable of providing a listener with a sense of realism is realized.

An acoustic signal processing method according to a seventh aspect of the present disclosure is the acoustic signal processing method according to the third aspect, wherein in the processing, the sound data is processed to change the amplitude value of the waveform in proportion to the value indicated by the smooth function determined raised to a power of a.

With this, the listener is able to hear sound in which fluctuations occur in the amplitude value, making it less likely for the listener to feel a sense of incongruity and allowing the listener to experience a sense of realism. Stated differently, an acoustic signal processing method capable of providing a listener with a sense of realism is realized.

An acoustic signal processing method according to an eighth aspect of the present disclosure is the acoustic signal processing method according to the fourth or fifth aspect, wherein in the processing, the sound data obtained is divided into processing frames of predetermined time, and the sound data is processed for each of the processing frames divided.

Accordingly, an acoustic signal processing method with reduced computational processing load is realized.

An acoustic signal processing method according to a ninth aspect of the present disclosure is the acoustic signal processing method according to the eighth aspect, wherein in the processing, the smooth function is so determined for each of the processing frames divided as to cause a value of the smooth function to be 1.0 at a start time and an end time of the processing frame.

This inhibits the occurrence of noise at the junction between a processing frame and the next processing frame thereof.

An acoustic signal processing method according to a tenth aspect of the present disclosure is the acoustic signal processing method according to the ninth aspect, wherein in the processing, a parameter specifying the smooth function is determined for each of the processing frames divided.

Accordingly, an acoustic signal processing method with reduced computational processing load is realized.

An acoustic signal processing method according to an eleventh aspect of the present disclosure is the acoustic signal processing method according to the tenth aspect, wherein the parameter is an amount of time from the start time to the end time.

This allows the parameter to be the time from the start time of the processing frame to the end time of the processing frame.

An acoustic signal processing method according to a twelfth aspect of the present disclosure is the acoustic signal processing method according to the tenth aspect, wherein the parameter is a value related to a maximum value of the smooth function.

This allows the parameter to be a value related to the maximum value of the smooth function.

An acoustic signal processing method according to a thirteenth aspect of the present disclosure is the acoustic signal processing method according to the tenth aspect, wherein the parameter is a parameter that varies a position where the smooth function reaches a maximum value.

This allows the parameter to be a parameter that varies the position where the smooth function reaches its maximum value.

An acoustic signal processing method according to a fourteenth aspect of the present disclosure is the acoustic signal processing method according to the tenth aspect, wherein the parameter is a parameter that varies a steepness of variation of the smooth function.

This allows the parameter to be a parameter that varies the steepness of variation of the smooth function.

An acoustic signal processing method according to a fifteenth aspect of the present disclosure is the acoustic signal processing method according to the tenth aspect, wherein the processing includes: determining a first parameter and a second parameter that specify the smooth function; processing the sound data obtained to change at least one of the frequency component, the phase, or the amplitude value of the waveform based on the smooth function specified by the first parameter determined; and processing the sound data obtained to change at least one of the frequency component, the phase, or the amplitude value of the waveform based on the smooth function specified by the second parameter determined, and the outputting includes: outputting the sound data processed based on the smooth function specified by the first parameter determined to a first output channel; and outputting the sound data processed based on the smooth function specified by the second parameter determined to a second output channel.

This allows for different sound data to be output for each output channel.

An acoustic signal processing method according to a sixteenth aspect of the present disclosure is the acoustic signal processing method according to any one of the tenth to fifteenth aspects, wherein the aerodynamic sound is a sound generated by the wind colliding with an object, and in the processing, the parameter is determined to simulate a characteristic of the wind speed of the wind.

As a result, the parameter is determined to simulate the variation of wind speed of wind including fluctuations. The sound data can be processed to change at least one of the frequency component, phase, or amplitude value of the waveform based on the smooth function specified by this parameter.

An acoustic signal processing method according to a seventeenth aspect of the present disclosure is the acoustic signal processing method according to any one of the tenth to fifteenth aspects, wherein the aerodynamic sound is a sound generated by the wind colliding with an ear of a listener who listens to the aerodynamic sound, and in the processing, the parameter is determined to simulate a characteristic of a wind direction of the wind.

As a result, the parameter is determined to simulate the variation of wind direction including fluctuations. The sound data can be processed to change at least one of the frequency component, phase, or amplitude value of the waveform based on the smooth function specified by this parameter.

An acoustic signal processing method according to an eighteenth aspect of the present disclosure is the acoustic signal processing method according to the eighth aspect, wherein a maximum value of the smooth function is 3 or less.

This allows the maximum value of the smooth function to be 3 or less.

An acoustic signal processing method according to a nineteenth aspect of the present disclosure is the acoustic signal processing method according to the eighth aspect, wherein a minimum value of the smooth function is 0 or more.

This allows the minimum value of the smooth function to be 0 or greater.

An acoustic signal processing method according to a twentieth aspect of the present disclosure is the acoustic signal processing method according to the eighth aspect, further including: receiving an instruction specifying Va and Vp, Va being the wind speed of the wind, Vp being a momentary wind speed of the wind, wherein in the processing, the smooth function is so determined that a maximum value of the smooth function becomes Vp/Va.

This allows the maximum value of the smooth function to be Vp/Va.

An acoustic signal processing method according to a twenty-first aspect of the present disclosure is the acoustic signal processing method according to the eighth aspect, wherein an average value of the predetermined time is 3 seconds.

This allows the average value of the predetermined time, which is the time length of the processing frame, to be 3 seconds.

An acoustic signal processing method according to a twenty-second aspect of the present disclosure is the acoustic signal processing method according to the sixteenth aspect, wherein the object has a shape imitating an ear.

This makes it possible to, for example, record the aerodynamic sound using a dummy head microphone.

A computer program according to a twenty-third aspect of the present disclosure is for causing a computer to execute the acoustic signal processing method according to any one of the first to twenty-second aspects.

Accordingly, the computer can execute the acoustic signal processing method described above in accordance with the computer program.

An acoustic signal processing device according to a twenty-fourth aspect of the present disclosure includes: an obtainer that obtains sound data indicating a waveform of a reference sound; a processor that processes the sound data to change at least one of a frequency component, a phase, or an amplitude value of the waveform based on simulated information in which variation of a natural phenomenon is simulated; and an outputter that outputs the sound data processed.

As a result, the sound data is processed to change at least one of the frequency component, phase, or amplitude value of the waveform, based on simulated information in which variation of natural phenomena including fluctuations is simulated. Therefore, in the processed sound data, fluctuations occur in at least one of the frequency component, phase, or amplitude, and fluctuations also occur in at least one of the frequency component, phase, or amplitude of the sound indicated by the processed sound data. Accordingly, the listener is able to hear sound in which fluctuations occur in at least one of the frequency component, phase, or amplitude value, making it less likely for the listener to feel a sense of incongruity and allowing the listener to experience a sense of realism. Stated differently, an acoustic signal processing device capable of providing a listener with a sense of realism is realized.

Furthermore, these general or specific aspects may be implemented using a system, a device, a method, an integrated circuit, a computer program, or a non-transitory computer-readable recording medium such as CD-ROM, or any combination thereof.

Hereinafter, embodiments will be described with reference to the drawings.

The embodiments described below each show a general or specific example. The numerical values, shapes, materials, elements, the arrangement and connection of the elements, steps, and the processing order of the steps, etc., described in the following embodiments are mere examples, and are therefore not intended to limit the scope of the claims.

In the following description, ordinal numbers such as first and second may be given to elements. These ordinal numbers are given to elements in order to distinguish between the elements, and thus do not necessarily correspond to an order that has intended meaning. Such ordinal numbers may be switched as appropriate, new ordinal numbers may be given, or the ordinal numbers may be removed.

The drawings are schematic diagrams, and are not necessarily precise depictions. Accordingly, scaling is not necessarily consistent throughout the drawings. In the drawings, the same reference numerals are given to substantially similar configurations, and repeated description thereof may be omitted or simplified.

In the present specification, terms indicating relationships between elements such as "perpendicular" or numerical ranges include, in addition to their exact meanings, substantially equivalent ranges, for example, with differences of about several percent.

Embodiment 1

Examples of Devices to Which an Acoustic Processing Technique or Encoding/Decoding Technique of the Present Disclosure Can Be Applied

Three-dimensional Sound Reproduction System

FIG. 1 illustrates a three-dimensional sound (immersive audio) reproduction system A0000 as one example of a system to which the acoustic processing or decoding processing according to the present disclosure is applicable. Three-dimensional sound reproduction system A0000 includes acoustic signal processing device A0001 and audio presentation device A0002.

Acoustic signal processing device A0001 applies acoustic processing to an audio signal emitted by a virtual sound source to generate an acoustic-processed audio signal to be presented to a listener. The audio signal is not limited to speech and may be any audible sound. Acoustic processing is, for example, signal processing applied to the audio signal to reproduce one or a plurality of sound-related effects that sound generated from a sound source undergoes during the period from when the sound is emitted until the listener hears it. Acoustic signal processing device A0001 performs acoustic processing based on information describing factors that cause the aforementioned sound-related effects. The spatial information includes, for example, information indicating the positions of the sound source, listener, and surrounding objects, information indicating the shape of the space, and parameters related to sound propagation. Acoustic signal processing device A0001 is, for example, a personal computer (PC), smartphone, tablet, or game console.

The acoustic-processed signal is presented to the listener (user) from audio presentation device A0002. Audio presentation device A0002 is connected to acoustic signal processing device A0001 via wireless or wired communication. The acoustic-processed audio signal generated by acoustic signal processing device A0001 is transmitted to audio presentation device A0002 via wireless or wired communication. When audio presentation device A0002 is configured as a plurality of devices, such as a device for the right ear and a device for the left ear, the plurality of devices present sound in synchronization by communicating between the plurality of devices or between each of the plurality of devices and acoustic signal processing device A0001. Audio presentation device A0002 is, for example, headphones worn on the listener's head, earphones, a head-mounted display, or surround speakers configured with a plurality of fixed speakers.

Three-dimensional sound reproduction system A0000 may be used in combination with an image presentation device or stereoscopic image presentation device that provides an Extended

Reality (ER) experience, including VR or AR, visually.

Although FIG. 1 illustrates a system configuration example in which acoustic signal processing device A0001 and audio presentation device A0002 are separate devices, three-dimensional sound reproduction system A0000 to which the acoustic signal processing method or decoding method according to the present disclosure is applicable is not limited to the configuration of FIG. 1. For example, acoustic signal processing device A0001 may be included in audio presentation device A0002, and audio presentation device A0002 may perform both acoustic processing and sound presentation. The acoustic processing described in the present disclosure may be divided between acoustic signal processing device A0001 and audio presentation device A0002 and performed, or a server connected via a network to acoustic signal processing device A0001 or audio presentation device A0002 may perform part or all of the acoustic processing described in the present disclosure.

Although naming "acoustic signal processing device" A0001 is used in the above description, when acoustic signal processing device A0001 performs acoustic processing by decoding a bitstream generated by encoding at least a portion of data of an audio signal or spatial information used for acoustic processing, acoustic signal processing device A0001 may be called a decoding device.

Encoding Device Example

FIG. 2 is a functional block diagram illustrating the configuration of one example of encoding device A0100 of the present disclosure.

Input data A0101 is data to be encoded that includes spatial information and/or an audio signal to be input to encoder A0102. Spatial information will be described in detail later.

Encoder A0102 encodes input data A0101 to generate encoded data A0103. Encoded data A0103 is, for example, a bitstream generated by the encoding process.

Memory A0104 stores encoded data A0103. Memory A0104 may be, for example, a hard disk or a solid-state drive (SSD), or may be any other type of memory.

Although a bitstream generated by the encoding process was given as one example of encoded data A0103 stored in memory A0104 in the above description, encoded data A0103 may be data other than a bitstream. For example, encoding device A0100 may store, in memory A0104, converted data generated by converting the bitstream into a predetermined data format. The converted data may be, for example, a file storing one or a plurality of bitstreams or a multiplexed stream. Here, the file is, for example, a file having a file format such as ISO Base Media File Format (ISOBMFF). Encoded data A0103 may be in the form of a plurality of packets generated by dividing the above-mentioned bitstream or file. When the bitstream generated by encoder A0102 is to be converted into data different from the bitstream, encoding device A0100 may include a converter not shown in the figure, or may perform the conversion process using a central processing unit (CPU).

Decoding Device Example

FIG. 3 is a functional block diagram illustrating the configuration of one example of decoding device A0110 of the present disclosure.

Memory A0114 stores, for example, the same data as encoded data A0103 generated by encoding device A0100. Memory A0114 reads the stored data and inputs it as input data A0113 to decoder A0112. Input data A0113 is, for example, a bitstream to be decoded. Memory A0114 may be, for example, a hard disk or SSD, or may be any other type of memory.

Decoding device A0110 may use, as input data A0113, converted data generated by converting the data read from memory A0114, rather than directly using the data stored in memory A0114 as input data A0113. The data before conversion may be, for example, multiplexed data storing one or a plurality of bitstreams. Here, the multiplexed data may be, for example, a file having a file format such as ISOBMFF. The data before conversion may be in the form of a plurality of packets generated by dividing the above-mentioned bitstream or file. When converting data different from the bitstream read from memory A0114 into a bitstream, decoding device A0110 may include a converter not shown in the figure, or may perform the conversion process using CPU.

Decoder A0112 decodes input data A0113 to generate audio signal A0111 to be presented to a listener.

Another Encoding Device Example

FIG. 4 is a functional block diagram illustrating the configuration of another example of encoding device A0120 of the present disclosure. In FIG. 4, configurations having the same functions as those in FIG. 2 are given the same reference numerals as in FIG. 2, and explanations of these configurations are omitted.

Encoding device A0120 differs from encoding device A0100 in that while encoding device A0100 stored encoded data A0103 in memory A0104, encoding device A0120 includes transmitter A0121 that transmits encoded data A0103 to an external destination.

Transmitter A0121 transmits transmission signal A0122 to another device or server based on encoded data A0103 or data in another data format generated by converting encoded data A0103. The data used for generating transmission signal A0122 is, for example, the bitstream, multiplexed data, file, or packet explained in regard to encoding device A0100.

Another Decoding Device Example

FIG. 5 is a functional block diagram illustrating the configuration of another example of decoding device A0130 of the present disclosure. In FIG. 5, configurations having the same functions as those in FIG. 3 are given the same reference numerals as in FIG. 3, and explanations of these configurations are omitted.

Decoding device A0130 differs from decoding device A0110 in that while decoding device A0110 reads input data A0113 from memory A0114, decoding device A0130 includes receiver A0131 that receives input data A0113 from an external source.

Receiver A0131 receives reception signal A0132 thereby obtaining reception data, and outputs input data A0113 to be input to decoder A0112. The reception data may be the same as input data A0113 input to decoder A0112, or may be data in a data format different from input data A0113. When the reception data is data in a data format different from input data A0113, receiver A0131 may convert the reception data to input data A0113, or a converter not shown in the figure or CPU included in decoding device A0130 may convert the reception data to input data A0113. The reception data is, for example, the bitstream, multiplexed data, file, or packet explained in regard to encoding device A0120.

Explanation of Functions of Decoder

FIG. 6 is a functional block diagram illustrating the configuration of decoder A0200, which is one example of decoder A0112 in FIG. 3 or FIG. 5.

Input data A0113 is an encoded bitstream and includes encoded audio data, which is an encoded audio signal, and metadata used for acoustic processing.

Spatial information manager A0201 obtains metadata included in input data A0113, and analyzes the metadata. The metadata includes information describing elements that act on sounds arranged in a sound space. Spatial information manager A0201 manages spatial information necessary for acoustic processing obtained by analyzing the metadata, and provides the spatial information to renderer A0203. Note that in the present disclosure, information used for acoustic processing is referred to as spatial information, but it may be referred to by other names. The information used for said acoustic processing may be referred to as, for example, sound space information or scene information. When the information used for acoustic processing changes over time, the spatial information input to renderer A0203 may be referred to as a spatial state, a sound space state, a scene state, or the like.

The spatial information may be managed for each sound space or for each scene. For example, when expressing different rooms as virtual spaces, spatial information for each room may be managed as a scene of a different sound space, or even for the same space, spatial information may be managed as different scenes according to the scene being expressed. In the management of spatial information, an identifier for identifying each item of spatial information may be assigned. The spatial information data may be included in a bitstream, which is a form of input data, or the bitstream may include an identifier of the spatial information, and the spatial information data may be obtained from somewhere other than from the bitstream. When the bitstream includes only the identifier of the spatial information, at the time of rendering, the spatial information data stored in the memory of acoustic signal processing device A0001 or in an external server may be obtained as input data using the identifier of the spatial information.

Note that the information managed by spatial information manager A0201 is not limited to information included in the bitstream. For example, input data A0113 may include data indicating characteristics or structure of a space obtained from VR or AR software application or server as data not included in the bitstream. For example, input data A0113 may include data indicating characteristics or a position of a listener or object as data not included in the bitstream. Input data A0113 may include information obtained by a sensor included in a terminal that includes the decoding device as information indicating the position of the listener, or information indicating the position of the terminal estimated based on information obtained by the sensor. Stated differently, spatial information manager A0201 may communicate with an external system or server and obtain spatial information and the position of the listener. Spatial information manager A0201 may obtain clock synchronization information from an external system and execute a process to synchronize with the clock of renderer A0203. The space in the above explanation may be a virtually formed space, that is, VR space, or it may be a real space (i.e., an actual space) or a virtual space corresponding to a real space, that is, AR or mixed reality (MR). The virtual space may also be called a sound field or sound space. The information indicating position in the above explanation may be information such as coordinate values indicating a position in space, information indicating a relative position with respect to a predetermined reference position, or information indicating movement or acceleration of a position in space.

Audio data decoder A0202 decodes encoded audio data included in input data A0113 to obtain an audio signal.

The encoded audio data obtained by three-dimensional sound reproduction system A0000 is, for example, a bitstream encoded in a predetermined format such as MPEG-H 3D Audio (ISO/IEC 23008-3). Note that MPEG-H 3D Audio is merely one example of an encoding method that can be used when generating encoded audio data to be included in the bitstream, and the bitstream may include encoded audio data encoded using other encoding methods. For example, the encoding method used may be a lossy codec such as MPEG-1 Audio Layer-3 (MP3), Advanced Audio Coding (AAC), Windows Media Audio (WMA), Audio Codec-3 (AC3), or Vorbis, or a lossless codec such as Apple Lossless Audio Codec (ALAC) or Free Lossless Audio Codec (FLAC), or any other arbitrary encoding method not mentioned above. For example, pulse code modulation (PCM) data may be considered as a type of encoded audio data. In such cases, the decoding process may, for example, when the number of quantization bits of PCM data is N, convert the N-bit binary number into a numerical format (for example, floating-point format) that can be processed by renderer A0203.

Renderer A0203 receives an audio signal and spatial information as inputs, applies acoustic processing to the audio signal using the spatial information, and outputs acoustic-processed audio signal A0111.

Before starting rendering, spatial information manager A0201 reads metadata of the input signal, detects rendering items such as objects or sounds specified by the spatial information, and transmits the detected rendering items to renderer A0203. After rendering starts, spatial information manager A0201 obtains the temporal changes in the spatial information and the listener's position, and updates and manages the spatial information. Spatial information manager A0201 then transmits the updated spatial information to renderer A0203. Renderer A0203 generates and outputs an audio signal with acoustic processing added based on the audio signal included in input data A0113 and the spatial information received from spatial information manager A0201.

The update processing of the spatial information and the output processing of the audio signal added with acoustic processing may be executed in the same thread, or spatial information manager A0201 and renderer A0203 may be allocated to respective independent threads. When the update processing of the spatial information and the output processing of the audio signal added with acoustic processing are processed in different threads, the activation frequency of the threads may be set individually, or the processing may be executed in parallel.

By executing processing in different independent threads for spatial information manager A0201 and renderer A0203, computational resources can be preferentially allocated to renderer A0203, allowing for safe implementation even in cases of sound output processing where even slight delays cannot be tolerated, for example, sound output processing where a popping noise occurs if there is a delay of even one sample (0.02 msec). In this case, allocation of computational resources to spatial information manager A0201 is restricted. However, the update of spatial information (for example, a process such as updating the direction of the listener's face) is a process that is performed at a low frequency compared to the output processing of the audio signal. Therefore, since responding instantaneously is not necessarily required unlike the output processing of the audio signal, restricting the allocation of computational resources does not significantly affect the acoustic quality provided to the listener.

The update of spatial information may be executed periodically at predetermined times or intervals, or may be executed when predetermined conditions are met. The update of spatial information may be executed manually by the listener or the manager of the sound space, or execution may be triggered by changes in an external system. For example, when the listener operates a controller to instantly warp the position of their avatar, rapidly advance or rewind time, or when the manager of the virtual space suddenly changes the environment of the scene as a production effect, the thread in which spatial information manager A0201 is arranged may be activated as a one-time interrupt process in addition to periodic activation.

The role of the information update thread that executes the update processing of spatial information includes, for example, processing to update the position or orientation of the listener's avatar in the virtual space based on the position or orientation of VR goggles worn by the listener, and updating the position of objects moving within the virtual space, and is handled within a processing thread that activates at a relatively low frequency of approximately several tens of Hz. Such processing that reflects the nature of direct sound may be performed in processing threads with low occurrence frequency. This is because the frequency at which the nature of direct sound changes is lower than the frequency of occurrence of audio processing frames for audio output. By doing so, the computational load of the processing can be relatively reduced, and the risk of pulsive noise occurring due to unnecessarily frequent information updates can be avoided.

FIG. 7 is a functional block diagram illustrating the configuration of decoder A0210, which is another example of decoder A0112 in FIG. 3 or FIG. 5.

Decoder A0210 illustrated in FIG. 7 differs from decoder A0200 illustrated in FIG. 6 in that input data A0113 includes an unencoded audio signal rather than encoded audio data. Input data A0113 includes an audio signal and a bitstream including metadata.

Spatial information manager A0211 is the same as spatial information manager A0201 in FIG. 6, so repeated explanation is omitted.

Renderer A0213 is the same as renderer A0203 in FIG. 6, so repeated explanation is omitted.

Note that while the configuration in FIG. 7 is referred to as decoder A0210 in the above description, it may also be called an acoustic processor that performs acoustic processing. A device including an acoustic processor may be called an acoustic processing device rather than a decoding device. Acoustic signal processing device A0001 may be called an acoustic processing device.

Physical Configuration of Acoustic Signal Processing Device

FIG. 8 illustrates one example of a physical configuration of an acoustic signal processing device. The acoustic signal processing device in FIG. 8 may be a decoding device. A portion of the configuration described here may be included in audio presentation device A0002. The acoustic signal processing device illustrated in FIG. 8 is one example of the above-mentioned acoustic signal processing device A0001.

The acoustic signal processing device in FIG. 8 includes a processor, memory, a communication I/F, a sensor, and a loudspeaker.

The processor is, for example, a central processing unit (CPU) or digital signal processor (DSP) or graphics processing unit (GPU), and the acoustic processing or decoding processing of the present disclosure may be performed by CPU or DSP or GPU executing a program stored in the memory. The processor may be a dedicated circuit that performs signal processing on audio signals, including the acoustic processing of the present disclosure.

The memory includes, for example, random access memory (RAM) or read-only memory (ROM). The memory may include magnetic storage media such as hard disks or semiconductor memories such as solid state drives (SSDs). The memory may include internal memory incorporated in CPU or GPU.

The communication interface (I/F) is, for example, a communication module that supports a communication method such as Bluetooth (registered trademark) or WiGig (registered trademark). The acoustic signal processing device illustrated in FIG. 8 includes a function to communicate with other communication devices via the communication I/F, and obtains a bitstream to be decoded. The obtained bitstream is, for example, stored in the memory.

The communication module includes, for example, a signal processing circuit that supports the communication method, and an antenna. In the above example, Bluetooth (registered trademark) or WiGig (registered trademark) were given as examples of the communication method, but the supported communication method may be Long Term Evolution (LTE), New Radio (NR), or Wi-Fi (registered trademark). The communication I/F may also be a wired communication method such as Ethernet (registered trademark), Universal Serial Bus (USB), or High-Definition Multimedia Interface (HDMI) (registered trademark), rather than the wireless communication methods described above.

The sensor performs sensing to estimate the position or orientation of the listener. More specifically, the sensor estimates the position and/or orientation of the listener based on one or more detection results of one or more of the position, orientation, movement, velocity, angular velocity, or acceleration of a part or all of the listener's body, such as the listener's head, and generates position information indicating the position and/or orientation of the listener. The position information may be information indicating the position and/or orientation of the listener in real space, or may be information indicating the displacement of the position and/or orientation of the listener with respect to the position and/or orientation of the listener at a predetermined time point. The position information may be information indicating a position and/or orientation relative to three-dimensional sound reproduction system A0000 or an external device including the sensor.

The sensor may be, for example, an imaging device such as a camera or a distance measuring device such as a light detection and ranging (LiDAR) distance measuring device, and may capture an image of the movement of the listener's head and detect the movement of the listener's head by processing the captured image. As the sensor, a device that performs position estimation using radio waves in any given frequency band such as millimeter waves may be used.

The acoustic signal processing device illustrated in FIG. 8 may obtain position information via the communication I/F from an external device including a sensor. In such cases, the acoustic signal processing device need not include a sensor. Here, an external device refers to, for example, audio presentation device A0002 described in FIG. 1, or a stereoscopic image reproduction device worn on the listener's head. In this case, the sensor is configured as a combination of various sensors, such as a gyro sensor and an acceleration sensor, for example.

As the speed of the movement of the listener's head, the sensor may detect, for example, the angular speed of rotation about at least one of three mutually orthogonal axes in the sound space as the axis of rotation or the acceleration of displacement in at least one of the three axes as the direction of displacement.

As the amount of the movement of the listener's head, the sensor may detect, for example, the amount of rotation about at least one of three mutually orthogonal axes in the sound space as the axis of rotation or the amount of displacement in at least one of the three axes as the direction of displacement. More specifically, sensor detects 6DoF (position (x, y, z) and angle (yaw, pitch, roll)) as the position of the listener. The sensor is configured as a combination of various sensors used for detecting movement, such as a gyro sensor and an acceleration sensor.

A sensor may be implemented by any device, such as a camera or a Global Positioning System (GPS) receiver, as long as it can detect the position of the listener. Position information obtained by performing self-localization estimation using laser imaging detection and ranging (LiDAR) or the like may be used. For example, when the audio signal reproduction system is implemented by a smartphone, the sensor is included in the smartphone.

The sensor may include a temperature sensor such as a thermocouple that detects the temperature of the acoustic signal processing device illustrated in FIG. 8, and a sensor that detects the remaining level of a battery included in or connected to the acoustic signal processing device.

The loudspeaker includes, for example, a diaphragm, a driving mechanism such as a magnet or voice coil, and an amplifier, and presents the acoustic-processed audio signal as sound to the listener. The loudspeaker operates the driving mechanism according to the audio signal (more specifically, a waveform signal indicating the waveform of the sound) amplified via the amplifier, and vibrates the diaphragm by means of the driving mechanism. In this way, the diaphragm vibrating according to the audio signal generates sound waves, which propagate through the air and are transmitted to the listener's ears, allowing the listener to perceive the sound.

Although in this example, the acoustic signal processing device illustrated in FIG. 8 includes a loudspeaker and provides the acoustic-processed audio signal via the loudspeaker, the means for providing the audio signal is not limited to this configuration. For example, the acoustic-processed audio signal may be output to external audio presentation device A0002 connected via a communication module. The communication performed by the communication module may be wired or wireless. As another example, the acoustic signal processing device illustrated in FIG. 8 may include a terminal that outputs an analog audio signal, and may present the audio signal from earphones or the like by connecting the earphone cable to the terminal. In this case, audio presentation device A0002, such as headphones, earphones, a head-mounted display, neck speakers, wearable speakers worn on the listener's head or a part of the body, or surround speakers configured with a plurality of fixed speakers, reproduces the audio signal.

Physical Configuration of Encoding Device

FIG. 9 illustrates one example of a physical configuration of an encoding device. The encoding device illustrated in FIG. 9 is one example of the above-mentioned encoding devices A0100 and A0120.

The encoding device in FIG. 9 includes a processor, memory, and a communication I/F.

The processor is, for example, a central processing unit (CPU) or digital signal processor (DSP), and the encoding processing of the present disclosure may be performed by CPU or DSP executing a program stored in the memory. The processor may be a dedicated circuit that performs signal processing on audio signals, including the encoding processing of the present disclosure.

The memory includes, for example, random access memory (RAM) or read-only memory (ROM). The memory may include magnetic storage media such as hard disks or semiconductor memories such as solid state drives (SSDs). The memory may include internal memory incorporated in CPU or GPU.

The communication interface (I/F) is, for example, a communication module that supports a communication method such as Bluetooth (registered trademark) or WiGig (registered trademark). The encoding device includes a function to communicate with other communication devices via the communication I/F, and transmits an encoded bitstream.

The communication module includes, for example, a signal processing circuit that supports the communication method, and an antenna. In the above example, Bluetooth (registered trademark) or WiGig (registered trademark) were given as examples of the communication method, but the supported communication method may be Long Term Evolution (LTE), New Radio (NR), or Wi-Fi (registered trademark). The communication I/F may also be a wired communication method such as Ethernet (registered trademark), Universal Serial Bus (USB), or High-Definition Multimedia Interface (HDMI) (registered trademark), rather than the wireless communication methods described above.

Configuration

Further, the configuration of acoustic signal processing device 100 according to Embodiment 1 will be described. FIG. 10 is a block diagram illustrating the functional configuration of acoustic signal processing device 100 according to the present embodiment.

Acoustic signal processing device 100 according to the present embodiment is a device for obtaining, processing, and outputting sound data indicating the waveform of a reference sound. The sound data is output, allowing the listener to hear the sound indicated by the sound data. Acoustic signal processing device 100 according to the present embodiment is for various applications in a virtual space, such as virtual reality or augmented reality (VR or AR) applications.

The reference sound may be any type of sound, but is, for example, a sound related to natural phenomena. In the present embodiment, natural phenomena are not particularly limited as long as they are phenomena occurring in nature, but are, for example, phenomena such as wind blowing, river water flowing, and animal activity. Sounds related to natural phenomena are, for example, sounds generated by wind blowing, babbling sounds caused by river water flowing, and animal calls.

Here, focusing on sounds generated by wind blowing, one example is the aerodynamic sound generated by wind colliding with objects in the virtual space. This aerodynamic sound is a sound generated by wind, for example, reaching and colliding with the listener's ear. Thus, the aerodynamic sound is a sound derived from wind blowing in the virtual space.

In the present embodiment, the reference sound is an aerodynamic sound generated by wind W. Note that the reference sound is not limited to this example; the reference sound may be a babbling sound caused by river water flowing or animal calls.

Wind in the virtual space is, as one example, wind caused by an object in the virtual space.

FIG. 11 illustrates electric fan FN, which is one example of an object according to the present embodiment, and listener L. When the object is an object that can blow air, such as electric fan FN, the aerodynamic sound is an aerodynamic sound generated by wind W caused by electric fan FN reaching listener L. More specifically, the aerodynamic sound is a sound generated when wind W blown from electric fan FN reaches listener L, according to, for example, the shape of the ear of listener L.

For example, when the object is a moving object (for example, a vehicle), the aerodynamic sound is the aerodynamic sound generated when wind W caused by the movement of the position of the object reaches listener L.

Wind W in the virtual space is, as one example, wind that naturally occurred in real space and is reproduced in the virtual space (hereinafter referred to as natural wind), and is wind whose generation position cannot be specified in the virtual space. When wind W in the virtual space is natural wind, it can also be said to be wind that is not caused by an object.

Note that the object according to the present embodiment is not limited to electric fan FN. The "object in a virtual space" is not particularly limited as long as it is included in content to be displayed on display 300 that displays content (video in this example) executed in the virtual space.

The object may be, for example, a moving object that generates wind due to the movement of the position of the object. The moving object includes, for example, an object indicating an animal, a plant, an artificial object, or a natural object. Examples of objects representing artificial objects include vehicles, bicycles, and aircraft. Examples of the artificial object include sports equipment, such as a baseball bat and a tennis racket; and furniture, such as a desk, a chair, and a wall clock. Note that the object is, as one example, at least one that can move or one that can be moved in the content.

As another example, the object may be an object that can blow air. Such objects are, for example, circulators, handheld fans, and air conditioners, in addition to the above-mentioned electric fan FN.

The object may be one that generates sound. The sound generated by the object is the sound indicated by the sound data associated with the object (hereinafter this may be referred to as object sound data). For example, when the object is electric fan FN, the sound generated by the object is the motor noise generated by the motor included in electric fan FN. For example, when the object is an ambulance, the sound generated by the object is the siren sound emitted from the ambulance.

Acoustic signal processing device 100 processes sound data (aerodynamic sound data) indicating the waveform of a reference sound, which is an aerodynamic sound in a virtual space, and outputs it to headphones 200. Hereinafter, sound data indicating the waveform of the reference sound (aerodynamic sound) may be referred to as aerodynamic sound data.

Next, headphones 200 will be described.

Headphones 200 serve as a device that reproduces the aerodynamic sound, that is, an audio output device that presents the aerodynamic sound to listener L. More specifically, headphones 200 reproduce the aerodynamic sound based on the aerodynamic sound data output by acoustic signal processing device 100. This allows listener L to listen to the aerodynamic sound. Instead of headphones 200, another output channel, such as a loudspeaker, may be used.

As illustrated in FIG. 10, headphones 200 include head sensor 201 and outputter 202.

Head sensor 201 senses the position of listener L determined by coordinates on a horizontal plane and the height in the vertical direction in the virtual space, and outputs, to acoustic signal processing device 100, second position information indicating the position of listener L for the aerodynamic sound in the virtual space.

Head sensor 201 may sense information of 6DoF of the head of listener L. For example, head sensor 201 may be an inertial measurement unit (IMU), an accelerometer, a gyroscope, or a magnetic sensor, or a combination of these.

Outputter 202 is a device that reproduces a sound that reaches listener L in a sound reproduction space. More specifically, outputter 202 reproduces the aerodynamic sound based on aerodynamic sound data indicating the aerodynamic sound output from acoustic signal processing device 100.

Next, display 300 will be described.

Display 300 is a display device that displays content (e.g., a video) including an object in a virtual space. The process for display 300 to display the content will be described later. Display 300 is, for example, a display panel, such as a liquid crystal panel or an organic electroluminescence (EL) panel.

Further, acoustic signal processing device 100 illustrated in FIG. 10 will be described. In the present embodiment, acoustic signal processing device 100 obtains, processes, and outputs sound data (aerodynamic sound data) indicating the waveform of a reference sound, which is an aerodynamic sound in a virtual space, to headphones 200.

As illustrated in FIG. 10, acoustic signal processing device 100 includes obtainer 110, processor 120, outputter 130, storage 140, and input interface 150.

Obtainer 110 obtains sound data indicating the waveform of the reference sound (aerodynamic sound). FIG. 12 illustrates sound data according to the present embodiment. FIG. 12 illustrates that the sound data is, for example, data indicating a waveform showing time and amplitude, and in this case, is aerodynamic sound data.

The sound data (aerodynamic sound data) is stored in storage 140, and obtainer 110 obtains the sound data (aerodynamic sound data) stored in storage 140.

Obtainer 110 obtains first position information indicating the position of the object (for example, electric fan FN). When the object is an object that generates sound, obtainer 110 obtains object sound data indicating the sound. Obtainer 110 obtains geometry information indicating the shape of the object.

Obtainer 110 obtains second position information. The second position information indicates, as described above, the position of listener L in a virtual space.

Obtainer 110 may obtain, for example, from the input signal, sound data indicating the waveform of a reference sound, first position information, object sound data, geometry information, and second position information. Obtainer 110 may obtain, from a source other than the input signal, sound data indicating the waveform of a reference sound, first position information, object sound data, geometry information, and second position information. The input signal will be described below. Hereinafter, sound data indicating the waveform of the reference sound (aerodynamic sound data) and object sound data may collectively be referred to as sound data.

The input signal includes, for example, spatial information, sensor information, and sound data (audio signal). The above information and sound data may be included in one input signal, or the above-mentioned information and sound data may be included in a plurality of separate signals. The input signal may include a bitstream including sound data and metadata (control information), and in such cases, the metadata may include spatial information and information for identifying the sound data.

The sound data indicating the waveform of a reference sound, the first position information, the object sound data, the geometry information, and the second position information explained above may be included in the input signal. More specifically, the first position information and geometry information may be included in the spatial information, and the second position information may be generated based on information obtained from sensor information. The sensor information may be obtained from head sensor 201, or may be obtained from another external device.

The spatial information is information related to the sound space (three-dimensional sound field) created by three-dimensional sound reproduction system A0000, and includes information about objects included in the sound space and information about the listener. The objects include sound source objects that emit sound and become sound sources, and non-sound-emitting objects that do not emit sound. The non-sound-emitting object functions as an obstacle object that reflects sound emitted by the sound source object, but a sound source object may also function as an obstacle object that reflects sound emitted by another sound source object. The obstacle object may also be called a reflection object.

Information commonly assigned to both sound source objects and non-sound-emitting objects includes position information, geometry information, and attenuation rate of loudness when the object reflects sound.

The position information is represented by coordinate values of three axes, for example, X-axis, the Y-axis, and Z-axis of Euclidean space, but it does not necessarily have to be three-dimensional information. The position information may be, for example, two-dimensional information represented by coordinate values of two axes, X-axis and the Y-axis. The position information of the object is defined by a representative position of the shape expressed by a mesh or voxel.

The geometry information may include information about the material of the surface.

The attenuation rate may be expressed as a real number less than or equal to 1 and greater than or equal to 0, or may be expressed as a negative decibel value. Since loudness does not increase from reflection in real space, the attenuation rate is set to a negative decibel value. However, for example, to create an eerie atmosphere in a non-realistic space, an attenuation rate greater than or equal to 1, that is, a positive decibel value, may be intentionally set. The attenuation rate may be set to different values for each of a plurality of frequency bands, or may be set independently for each frequency band. In cases where the attenuation rate is set for each type of material of the object surface, a value of the corresponding attenuation rate may be used based on information about the surface material.

Information commonly assigned to both sound source objects and non-sound-emitting objects may include information indicating whether the object belongs to an animate thing or information indicating whether the object is a moving object. When the object is a moving object, the position information may move over time, and the changed position information or the amount of change is transmitted to renderers A0203 and A0213.

Information related to the sound source object includes, in addition to the information commonly assigned to both sound source objects and non-sound-emitting objects mentioned above, object sound data and information necessary for radiating the object sound data into the sound space. The object sound data is data representing sound perceived by the listener, indicating information such as the frequency and intensity of the sound. The object sound data is typically PCM signal, but may also be data compressed using an encoding method such as MP3. In such cases, since the signal needs to be decoded at least before reaching the generator (generator 907 to be described later with reference to FIG. 34), renderers A0203 and A0213 may include a decoder (not illustrated). Alternatively, the signal may be decoded in audio data decoder A0202.

At least one item of object sound data may be set for one sound source object, and a plurality of items of object sound data may be set. Identification information for identifying each item of object sound data may be assigned, and as information related to the sound source object, the identification information of the object sound data may be retained as metadata.

As information necessary for radiating object sound data into the sound space, for example, information on a reference loudness that serves as a standard when reproducing the object sound data, information related to the position of the sound source object, information related to the orientation of the sound source object, and information related to the directivity of the sound emitted by the sound source object may be included.

The information on the reference loudness may be, for example, the root mean square value of the amplitude of the object sound data at the sound source position when radiating the object sound data into the sound space, and may be expressed as a floating-point decibel (dB) value. For example, when the reference loudness is 0 dB, the information on the reference loudness may indicate that the sound is to be radiated into the sound space from the position indicated by the above-mentioned position information at the same loudness, without increasing or decreasing it, of the signal level indicated by the object sound data. The information on the reference loudness may indicate that, when it is -6 dB, the sound is to be radiated into the sound space from the position indicated by the above-mentioned position information at approximately half the loudness of the signal level indicated by the object sound data. The information on the reference loudness may be assigned to a single item of object sound data or collectively to a plurality of items of object sound data.

For example, information indicating time-series variations in the loudness of the sound source may be included as information on loudness included in the information necessary for radiating object sound data into the sound space. For example, when the sound space is a virtual conference room and the sound source is a speaker, the loudness transitions intermittently over short periods of time. Expressing it even more simply, it can also be said that sound portions and silent portions occur alternately. When the sound space is a concert hall and the sound source is a performer, the loudness is maintained for a certain duration of time. When the sound space is a battlefield and the sound source is an explosive, the loudness of the explosion sound becomes large for only an instant and then continues to be silent thereafter. In this way, the loudness information of the sound source includes not only information on the magnitude of sound but also information on the transition of sound magnitude, and such information may be used as information indicating the characteristics of the object sound data.

Here, the information on the transition of sound magnitude may be data showing frequency characteristics in chronological order. The information on the transition of sound magnitude may be data indicating the duration of a sound interval. The information on the transition of sound magnitude may be data indicating the chronological sequence of durations of sound intervals and silent intervals. The information on the transition of sound magnitude may be data that enumerates, in chronological order, a plurality of sets of data including a duration during which the amplitude of the sound signal can be considered stationary (can be considered approximately constant) and the amplitude value of said signal during that duration. The information on the transition of sound magnitude may be data of a duration during which the frequency characteristics of the sound signal can be considered stationary. The information on the transition of sound magnitude may be data that enumerates, in chronological order, a plurality of sets of data including a duration during which the frequency characteristics of the sound signal can be considered stationary and the frequency characteristic data during that duration. The information on the transition of sound magnitude may be in the format of, for example, data indicating the general shape of a spectrogram. The loudness that serves as the standard for the above-mentioned frequency characteristics may be used as the reference loudness. The information indicating the reference loudness and the information indicating the characteristics of the object sound data may be used not only to calculate the loudness of direct sound or reflected sound to be perceived by the listener, but also for selection processing for selecting whether or not to make the listener perceive the sound.

Information regarding orientation is typically expressed in terms of yaw, pitch, and roll. Alternatively, the orientation information may be expressed in terms of azimuth (yaw) and elevation (pitch), omitting the rotation of roll. The orientation information may change over time, and when changed, it is transmitted to renderers A0203 and A0213.

Information related to the listener is information regarding the position information and orientation of the listener in the sound space. The position information is represented by the position on X-, Y-, and Z-axes of Euclidean space, but it does not necessarily have to be three-dimensional information and may be two-dimensional information. Information regarding orientation is typically expressed in terms of yaw, pitch, and roll. Alternatively, the orientation information may be expressed in terms of azimuth (yaw) and elevation (pitch), omitting the rotation of roll. The position information and orientation information may change over time, and when changed, they are transmitted to renderers A0203 and A0213.

The sensor information includes the rotation amount or displacement amount detected by the sensor worn by the listener, and the position and orientation of the listener. The sensor information is transmitted to renderers A0203 and A0213, and renderers A0203 and A0213 update the information on the position and orientation of the listener based on the sensor information. The sensor information may use position information obtained by performing self-localization estimation by a mobile terminal using the global positioning system (GPS), a camera, or laser imaging detection and ranging (LiDAR), for example. Information obtained from outside through a communication module, other than from a sensor, may also be detected as sensor information. Information indicating the temperature of acoustic signal processing device 100, and information indicating the remaining level of the battery may be obtained as sensor information from the sensor. Information indicating the computational resources (CPU capability, memory resources, PC performance) of acoustic signal processing device 100 or audio presentation device A0002 may be obtained in real time as sensor information.

In the present embodiment, obtainer 110 obtains sound data indicating the waveform of a reference sound, first position information, object sound data, and geometry information from storage 140, but obtainer 110 is not limited to this example. For example, obtainer 110 may obtain these from a device (for example, server device 500, such as a cloud server) other than acoustic signal processing device 100. Obtainer 110 also obtains the second position information from headphones 200 (head sensor 201, more specifically). The source is however not limited thereto.

Next, the first position information will be described.

As described above, an object in a virtual space is included in content (e.g., a video) to be displayed on display 300, and according to the present embodiment, it is, for example, electric fan FN.

The first position information indicates where in the virtual space electric fan FN is located at a certain time point. In the virtual space, for example, electric fan FN may be moved as a result of the user picking up and moving electric fan FN. To address this, obtainer 110 obtains the first position information continuously. Obtainer 110, for example, obtains the first position information each time the spatial information is updated by spatial information managers A0201 and A0211.

Next, the sound data including sound data indicating the waveform of the reference sound (aerodynamic sound) and object sound data associated with the object will be described.

The sound data including the object sound data and aerodynamic sound data described in the present specification may be, but is not limited to, a sound signal such as pulse code modulation (PCM) data; the sound data may be any information indicating the characteristics of sound.

As one example, assuming the sound signal is a noise signal with a loudness of X decibels, the sound data related to that sound signal may be PCM data itself indicating that sound signal, or may be data consisting of information indicating that the component is a noise signal and information indicating that the loudness is X decibels. As another example, assuming the sound signal is a noise signal with a predetermined characteristic of Peak/Dip in frequency components, the sound data related to that sound data may be PCM data itself indicating that sound signal, or may be data consisting of information indicating that the component is a noise signal and information indicating Peak/Dip of the frequency components.

Note that in the present specification, a sound signal based on sound data means PCM data indicating that sound data.

The aerodynamic sound data, which is sound data indicating the waveform of the reference sound, is stored in storage 140 in advance, as described above. Aerodynamic sound is the sound generated by wind W colliding with an object, and in this case, it is the sound generated by wind W colliding with the ear of listener L. The aerodynamic sound data is data of a recording of sound generated by wind W colliding with a human ear or an object (model) having a shape simulating the human ear. In the present embodiment, the aerodynamic sound data is data of a recording of sound resulting from wind reaching an object (model) simulating a human ear. A dummy head microphone or the like is used as a model simulating a human ear, and aerodynamic sound data is recorded.

Next, the geometry information will be described.

The geometry information indicates the shape of the object in the virtual space. The geometry information indicates the shape of the object, more specifically, the three-dimensional shape of the object as a rigid body. The shape of the object is, for example, represented by a sphere, a rectangular parallelepiped, a cube, a polyhedron, a cone, a pyramid, a cylinder, or a prism alone or in combination. Note that the geometry information may be expressed, for example, by mesh data, or by voxels, point groups in three dimensions, or a set of planes formed of vertices with three-dimensional coordinates.

Note that the first position information includes object identification information for identifying the object. The object sound data also includes object identification information. The geometry information also includes object identification information.

Assume that obtainer 110 obtains the first position information, object sound data, and geometry information independently of each other. Even in this case, the object identification information included in each of the first position information, object sound data, and geometry information is referred to so as to identify the objects indicated by the first position information, object sound data, and geometry information. For example, the objects indicated by each of the first position information, object sound data, and geometry information can be here easily identified as the same electric fan FN. Stated differently, three items of object identification information of the first position information, object sound data, and geometry information obtained by obtainer 110 are referred to so as to clarify that the first position information, object sound data, and geometry information are related to electric fan FN. Accordingly, the first position information, object sound data, and geometry information are associated as information indicating electric fan FN.

Next, the second position information will be described.

Listener L can move in the virtual space. The second position information indicates where in the virtual space listener L is located at a certain time point. Note that since listener L can move in the virtual space, obtainer 110 obtains the second position information continuously. Obtainer 110, for example, obtains the second position information each time the spatial information is updated by spatial information managers A0201 and A0211.

The sound data indicating the waveform of the reference sound, the first position information, the object sound data, the geometry information, and the second position information may be included in metadata, control information, or header information included in the input signal. When the sound data including object sound data and aerodynamic sound data is a sound signal (PCM data), information identifying the sound signal may be included in metadata, control information, or header information, and the sound signal may be included elsewhere other than in the metadata, control information, or header information. Stated differently, acoustic signal processing device 100 (more specifically, obtainer 110) may obtain metadata, control information, or header information included in the input signal, and perform acoustic processing based on the metadata, control information, or header information. It is sufficient so long as acoustic signal processing device 100 (more specifically, obtainer 110) obtains the sound data indicating the waveform of the reference sound, the first position information, the object sound data, the geometry information, and the second position information; the source from which they are obtained is not limited to the input signal. The sound data including object sound data and aerodynamic sound data and the metadata may be stored in a single input signal or may be separately stored in plural input signals.

Sound signals other than the sound data including object sound data and aerodynamic sound data may be stored as audio content information in the input signal. The audio content information may be subjected to encoding processing such as MPEG-H 3D Audio (ISO/IEC 23008-3) (hereinafter, referred to as MPEG-H 3D Audio). The encoding processing technology is not limited to MPEG-H 3D Audio; other known technologies may be used. The sound data indicating the waveform of the reference sound, the first position information, the object sound data, the geometry information, and the second position information may also be subjected to encoding processing.

Stated differently, acoustic signal processing device 100 obtains the sound signal and metadata included in the encoded bitstream. In acoustic signal processing device 100, audio content information is obtained and decoded. In the present embodiment, acoustic signal processing device 100 functions as a decoder (e.g., decoders A0200 and A0210) included in a decoding device (e.g., decoding devices A0110 and A0130), and more specifically, functions as renderers A0203 and A0213 included in the decoder. Note that the term "audio content information" in the present disclosure should be interpreted as the sound signal itself, or as information including sound data indicating the waveform of a reference sound, the first position information, the object sound data, the geometry information, and the second position information, in accordance with the technical content.

Obtainer 110 outputs the obtained sound data indicating the waveform of the reference sound, the first position information, the object sound data, the geometry information, and the second position information to processor 120 and outputter 130.

Processor 120 processes the sound data to change at least one of the frequency component, phase, or amplitude value of the waveform indicated by the sound data showing the waveform of the reference sound, based on simulated information in which variation of natural phenomena is simulated. In the present embodiment, since the reference sound is an aerodynamic sound generated by wind W, the natural phenomena in the simulated information is the blowing of wind W. The variation of natural phenomena is the variation of wind W, and more specifically, it refers to the variation in the wind speed of wind W. Note that the variation of natural phenomena may be variation in the direction (wind direction) of wind W.

In real space, variations in natural phenomena include fluctuations (for example, 1/f fluctuations). Accordingly, the simulated information is information in which variation of natural phenomena including fluctuations has been simulated. In the present embodiment, the simulated information is information in which variation of the wind speed of wind W has been simulated, and more specifically, it is information expressing fluctuations included in the variation of the wind speed of wind W.

More specifically, the simulated information is a smooth function in which variation of the wind speed has been simulated. Here, processor 120 determines, as the simulated information, a smooth function in which variation of the wind speed has been simulated.

A smooth function means a function that is differentiable and continuous. Stated differently, a smooth function is a function that does not have any sharp points.

FIG. 13 illustrates one example of a smooth function according to the present embodiment. As illustrated in FIG. 13, the smooth function is, as one example, a sine curve, but is not limited to this and may be a cosine curve or the like.

Processor 120 processes the sound data to change at least one of the frequency component, phase, or amplitude value of the waveform based on a value indicated by the smooth function determined by processor 120. For example, processor 120 processes the sound data to shift the frequency component of the waveform to a frequency proportional to a value indicated by the smooth function in which variation of the wind speed has been simulated.

The value indicated by the smooth function is the value on the vertical axis illustrated in FIG. 13, and is information indicating the ratio between the wind speed of the aerodynamic sound as the reference sound and the wind speed of the aerodynamic sound indicated by the sound data processed by processor 120. Stated differently, the value indicated by the smooth function is a value indicating the ratio between the wind speed of the aerodynamic sound before processing and the wind speed of the aerodynamic sound after processing.

Processor 120 processes the sound data and outputs it to outputter 130.

Outputter 130 outputs the sound data processed by processor 120. Here, outputter 130 outputs the processed aerodynamic sound data to headphones 200. This allows headphones 200 to reproduce the aerodynamic sound indicated by the output aerodynamic sound data. This allows listener L to listen to the aerodynamic sound.

Storage 140 is a storage device that stores computer programs to be executed by obtainer 110, processor 120, and outputter 130, as well as aerodynamic sound data.

Input interface 150 receives an input operation from a user (for example, a creator of content executed in the virtual space) of acoustic signal processing device 100. Specifically, input interface 150 is implemented by hardware buttons, but may also be implemented by a touch panel or the like.

Here, the geometry information according to the present embodiment will be described again. The geometry information indicates the shape of the object (i.e., electric fan FN), and is used for generating a video of the object in the virtual space. Stated differently, the geometry information is also used for generating a content (for example, a video) to be displayed on display 300.

Obtainer 110 outputs the obtained geometry information to display 300 as well. Display 300 obtains the geometry information output by obtainer 110. Display 300 further obtains attribute information indicating an attribute (for example, the color), other than the shape, of the object (i.e., electric fan FN) in the virtual space. Display 300 may directly obtain the attribute information from a device (e.g., server device 500) other than acoustic signal processing device 100, or may obtain the attribute information from acoustic signal processing device 100. Display 300 generates content (for example, a video) based on the obtained geometry information and attribute information, and displays the content.

Next, Operation Examples 1 and 2 of an acoustic signal processing method performed by acoustic signal processing device 100 will be described.

Operation Example 1

FIG. 14 is a flowchart of Operation Example 1 performed by acoustic signal processing device 100 according to the present embodiment.

As illustrated in FIG. 14, first, input interface 150 receives an input operation indicating that the simulated information is a smooth function in which variation of the wind speed has been simulated (S10). Input interface 150, for example, receives the input operation from a user of acoustic signal processing device 100.

Next, obtainer 110 obtains sound data indicating the waveform of the reference sound (S20). In this operation example, the reference sound is an aerodynamic sound generated by wind, and the sound data indicating the waveform of the reference sound is aerodynamic sound data. This step S20 corresponds to the obtaining step.

Processor 120 determines, as simulated information in which variation of natural phenomena has been simulated, a smooth function in which variation of the wind speed has been simulated (S30). Processor 120 may determine the simulated information according to the input operation received in step S10. In this operation example, processor 120 determines, as the simulated information, the smooth function illustrated in FIG. 13.

Furthermore, processor 120 processes the sound data (aerodynamic sound data) to change at least one of the frequency component, phase, or amplitude value of the waveform based on a value (ratio) indicated by the smooth function determined by processor 120 (S40).

Step S30 and step S40 correspond to the processing step.

Processor 120 outputs the processed sound data (aerodynamic sound data) to outputter 130.

Outputter 130 outputs the sound data (aerodynamic sound data) processed by processor 120 to headphones 200 (S50). This step S50 corresponds to the outputting step.

This allows listener L to listen to the aerodynamic sound output from headphones 200.

Next, the processing performed by processor 120 in steps S30 and S40 will be described in greater detail.

FIG. 15 is a diagram for explaining processing performed by processor 120 according to the present embodiment.

In FIG. 15, (a) illustrates the sound data (aerodynamic sound data D1 before processing) illustrated in FIG. 12 and the smooth function illustrated in FIG. 13. As illustrated in (a) in FIG. 15, the horizontal axis, which is the time axis, corresponds between aerodynamic sound data D1 before processing and the smooth function.

In FIG. 15, (b) is a diagram for explaining processing in the region enclosed by the rectangular dash-dot line in (a) in FIG. 15. In FIG. 15, (b) illustrates an enlarged view of aerodynamic sound data D1 before processing, the smooth function, and aerodynamic sound data D11 after processing.

Aerodynamic sound data D1 before processing is indicated by the plurality of black dots in (b) in FIG. 15. Each of the plurality of black dots corresponds to aerodynamic sound data D1 before processing shown in (a) in FIG. 15. Each of the plurality of black dots can be said to be a sample point of aerodynamic sound data D1 before processing.

First, processor 120 performs first processing. The first processing will be described hereinafter.

Processor 120 determines an interpolation function that interpolates between one black dot and another adjacent black dot. The interpolation function is, for example, a spline function, but the interpolation function is not limited to this and may be a known function. Processor 120 may also perform linear interpolation (straight line interpolation) between one black dot and another adjacent black dot, in which case the computational processing load is reduced. As illustrated in (b) in FIG. 15, in the first processing, all space between two adjacent black dots are interpolated.

Accordingly, as illustrated in (b) in FIG. 15, the space between one black dot and another adjacent black dot is interpolated, and a line is shown. The spacing between the plurality of black dots before processing is defined as "1".

Next, processor 120 performs second processing. The second processing will be described hereinafter.

In the second processing, processor 120 reads a value of one black dot, which is aerodynamic sound data D1 before processing at time t, and determines the read value as aerodynamic sound data D11 after processing at the time t. Aerodynamic sound data D11 after processing is indicated by the plurality of white dots (hollow dots) in (c) in FIG. 15.

Next, processor 120 reads a value of the smooth function for each unit time. For example, processor 120 reads values such as "0.5", "0.5", "0.4999", and "0.4998" as values of the smooth function.

Processor 120 determines the value of the smooth function read at time t as a stride, and reads a value of the interpolation function at a position where the time has advanced by the stride from one black dot of aerodynamic sound data D1 before processing at time t.

Further, processor 120 determines the read value of the interpolation function as a value of aerodynamic sound data D11 after processing. Here, processor 120 determines the interval of aerodynamic sound data D11 (plurality of white dots) after processing such that it is the same value as the interval of aerodynamic sound data D1 (plurality of black dots) before processing, that is, is "1". Thus, the second processing is performed.

The second processing will be described using a specific example focusing on time t1.

Processor 120 reads a value of black dot B1, which is aerodynamic sound data D1 before processing at time t1, and determines the read value as a value of white dot B11 of aerodynamic sound data D11 after processing at time t1. Stated differently, processor 120 uses the read value of black dot B1 as is for the value of white dot B11.

Further, processor 120 reads a value of 0.5, which is the value of the smooth function at time t1, and this is determined as the stride. Aerodynamic sound data D1 before processing at time t1 is indicated by black dot B1, and processor 120 reads a value of the interpolation function at a position where the time has advanced by 0.5 from black dot B1, which is aerodynamic sound data D1 before processing. This position is indicated as position P1 in (b) in FIG. 15.

Processor 120 determines the read value of the interpolation function (the value indicated by position P1) as a value of aerodynamic sound data D11 after processing. Processor 120 determines the interval of aerodynamic sound data D11 (plurality of white dots) after processing such that it is the same value as the interval of aerodynamic sound data D1 (plurality of black dots) before processing, which is "1".

This first processing and second processing gives aerodynamic sound data D11 after processing a shape that is horizontally stretched compared to aerodynamic sound data D1 before processing. Therefore, aerodynamic sound data D11 after processing is sound data in which the frequency component has shifted to a lower range compared to aerodynamic sound data D1 before processing.

FIG. 16 is another diagram for explaining processing performed by processor 120 according to the present embodiment.

Similar to (a) in FIG. 15, (a) in FIG. 16 illustrates the sound data (aerodynamic sound data) illustrated in FIG. 12 and the smooth function illustrated in FIG. 13.

In FIG. 16, (b) and (c) are diagrams for explaining processing in the regions enclosed by the rectangular dash-dot lines in (a) in FIG. 16. In FIG. 15, (b) and (c) each illustrate an enlarged view of aerodynamic sound data D1 before processing, the smooth function, and aerodynamic sound data D11 after processing.

In aerodynamic sound data D1 before processing illustrated in (b) and (c) in FIG. 16, processing similar to that explained using (b) in FIG. 15 is performed. That is, the first processing and the second processing are performed.

In (b) in FIG. 16, processor 120 reads values such as "1", "1", "1.0001", and "1.0002" as values of the smooth function. Because the values of smooth function read are approximately 1, aerodynamic sound data D11 after processing has a shape equivalent to aerodynamic sound data D1 before processing. Therefore, aerodynamic sound data D11 after processing is sound data in which the frequency component has hardly shifted compared to aerodynamic sound data D1 before processing.

In (c) in FIG. 16, processor 120 reads values such as "1.5", "1.5", "1.4999", and "1.4998" as values of the smooth function. Because the values of smooth function read are approximately 1.5, aerodynamic sound data D11 after processing has a shape that is horizontally compressed compared to aerodynamic sound data D1 before processing. Therefore, aerodynamic sound data D11 after processing is sound data in which the frequency component has shifted to a higher range compared to aerodynamic sound data D1 before processing.

As described above, the simulated information is information in which variation of natural phenomena including fluctuations has been simulated, and more specifically, is information expressing fluctuations due to variation of the wind speed of wind W, and in this operation example, is information indicated by a smooth function.

In this operation example, sound data (aerodynamic sound data) indicating the waveform of the reference sound is processed so that the frequency component of the waveform changes based on simulated information in which variation of natural phenomena including fluctuations has been simulated. Therefore, fluctuations occur in the frequency component of the processed aerodynamic sound data, and fluctuations also occur in the frequency component of the aerodynamic sound indicated by the processed aerodynamic sound data. Accordingly, listener L is able to hear such aerodynamic sound in which fluctuations occur in the frequency component, making it less likely for listener L to feel a sense of incongruity and allowing listener L to experience a sense of realism.

In step S40 of Operation Example 1, the following processing may be performed.

As described above, in step S40, the stride may be determined as follows. Here, the sampling frequency of the aerodynamic sound data before being processed by processor 120 is defined as Fsc, and the sampling frequency of the aerodynamic sound data output by outputter 130 is defined as Fso, where Fsc and Fso have different values.

In such cases, the stride may satisfy the following expression.

$$\texttt{value of the smooth function} \times (\texttt{Fsc} / \texttt{Fso})$$

The effects of the stride satisfying the above expression will be explained below.

For example, when Fso is 48 kHz, it is preferable to downsample Fsc from 48 kHz to 16 kHz. For example, this makes it possible to reduce memory size to 1/3 when aerodynamic sound data of the same time length is stored in storage 140. Furthermore, when working with a fixed memory size, this method makes it possible to generate aerodynamic sound data that is three times longer, which helps reduce any jarring transitions or discontinuities that might occur when connecting different segments of aerodynamic sound data.

Next, the possibility of reducing aliasing distortion will be described. FIG. 17 illustrates sound data according to the present embodiment. More specifically, (a) and (b) in FIG. 17 each illustrate the frequency characteristic of aerodynamic sound data before processing (for example, aerodynamic sound data D1 before processing illustrated in FIG. 15), where the horizontal axis in (a) in FIG. 17 is a logarithmic axis, and the horizontal axis in (b) in FIG. 17 is a linear axis. In FIG. 17, (c) illustrates the frequency characteristic where the frequency component of the aerodynamic sound data illustrated in (b) in FIG. 17 has been shifted to higher frequencies. Here, the frequency component in (c) in FIG. 17 has been shifted to twice the frequency of the frequency component in (b) in FIG. 17. For example, the frequency component at 2000 Hz in (b) in FIG. 17 has been shifted to 4000 kHz in (c) in FIG. 17.

In (a) and (b) in FIG. 17, the solid line illustrates the frequency characteristic when the sampling frequency of the aerodynamic sound data before processing is 16 kHz, and the dash-dot line illustrates the frequency characteristic when the sampling frequency of the aerodynamic sound data before processing is 48 kHz. Note that the dash-dot line overlaps with the solid line in the low frequency region and is therefore not shown in the figure.

As FIG. 17 illustrates, the aerodynamic sound data often exhibits a characteristic structure in the low frequency region, while its components monotonically decrease in the high frequency region.

In (c) in FIG. 17, the solid line illustrates the frequency characteristic when the sampling frequency of the shifted aerodynamic sound data is 16 kHz, and the dash-dot line illustrates the frequency characteristic when the sampling frequency of the shifted aerodynamic sound data is 48 kHz. Note that the dash-dot line overlaps with the solid line in the low frequency region and is therefore not shown in the figure.

When the sampling frequency of the aerodynamic sound data indicated by the dash-dot line is 48 kHz, there are frequency components in the frequency region of 12 kHz and above in (b) in FIG. 17, and aliasing distortion indicated by the dashed line appears in (c) in FIG. 17.

When the sampling frequency of the aerodynamic sound data indicated by the solid line is 16 kHz, there are no frequency components in the frequency region of 12 kHz and above in (b) in FIG. 17, so no aliasing distortion appears in (c) in FIG. 17.

In this way, it is possible to inhibit the appearance of aliasing distortion due to frequency shifting.

There is also an effect that there is almost no increase in computational resources required for the reduction of memory size and inhibition of the appearance of aliasing distortion as described above.

The above corresponds to the effects achieved by the stride satisfying the above expression.

In Operation Example 1 of the present embodiment, the aerodynamic sound data is stored in storage 140 in advance, but this example is non-limiting. For example, processor 120 may generate the aerodynamic sound data. For example, processor 120 may obtain the noise signal and process the obtained noise signal with each of a plurality of band-emphasis filters to generate the aerodynamic sound data.

Operation Example 2

As described above, in Operation Example 1, the sound data (aerodynamic sound data) is processed to change the frequency component of the waveform, but the present disclosure is not limited to this. In Operation Example 2, the sound data (aerodynamic sound data) is processed to change the amplitude value of the waveform.

That is, in Operation Example 2, steps S10 to S30 are performed in the same manner as in Operation Example 1. In step S40, processor 120 processes the sound data (aerodynamic sound data) to change the amplitude value of the waveform based on a value (ratio) indicated by the smooth function determined by processor 120.

The amplitude value of the waveform means the degree of loudness of the aerodynamic sound indicated by the aerodynamic sound data indicated by that waveform. The aerodynamic sound and the wind speed of wind W that generates this aerodynamic sound have the following relationship. The loudness of the aerodynamic sound is proportional to the wind speed of wind W raised to the power of $\alpha$. Therefore, processor 120 processes the sound data to change the amplitude value of the waveform in proportion to the value indicated by the determined smooth function raised to the power of $\alpha$. The value of $\alpha$ differs depending on the type of aerodynamic sound.

For example, there is an aerodynamic sound generated by a rod-shaped object cutting through wind. This aerodynamic sound is generated when a bat used in baseball or the like is swung. The loudness of this type of aerodynamic sound is proportional to the wind speed raised to the power of 6 (see NPL 1).

For example, there is an aerodynamic sound generated when wind enters the gap between an object and another object. This aerodynamic sound is what is referred to as a cavity sound. The loudness of this type of aerodynamic sound is proportional to the wind speed raised to the power of 4 (see NPL 1).

Here, let R be a value indicated by the smooth function in which variation of the wind speed has been simulated. In any of the above types of aerodynamic sound, the loudness of the aerodynamic sound is amplified or attenuated by a value corresponding to $R^\alpha$. That is, when R is greater than 1, amplification occurs, and when R is less than 1, attenuation occurs. Here, what must be noted is that when the loudness of the aerodynamic sound is proportional to the wind speed raised to the power of $\alpha$, the loudness of the aerodynamic sound becomes a very steep variation. This steep variation will be described with reference to FIG. 18.

FIG. 18 illustrates a value R indicated by a smooth function according to the present embodiment, and an amplification rate and attenuation rate of loudness of aerodynamic sound. FIG. 18 illustrates the relationship between R and the loudness of aerodynamic sound when $\alpha$ is 6, as indicated by the dash-double-dot line. Note that near R=1, the dash-double-dot line overlaps with the solid line.

As illustrated by the dash-double-dot line in FIG. 18, the amplification rate exceeds 30 dB at R=2.0, and the attenuation rate falls below -30 dB at R=0.5. To faithfully reproduce such steep variations, extremely expensive playback equipment with a very wide dynamic range is required, and such playback equipment is excessive for acoustic production in a virtual space.

To avoid the need for such expensive playback equipment, threshold r is used. As one example, in FIG. 18, 1.3 is used as threshold r. For example, amplification rate (attenuation rate) G in the interval (1/r) < R < r may be different from that in the intervals R < (1/r) and r < R. In FIG. 18, the interval (1/r) < R < r is indicated by a rectangular dashed line. In FIG. 18, the dash-dot line and the solid line represent cases where amplification rate (attenuation rate) G in the interval (1/r) < R < r is different from that in the intervals R < (1/r) and r < R.

In the interval (1/r) < R < r, the dash-dot line and the solid line satisfy the following equation for amplification rate (attenuation rate) G.

$$G = R\char`\^\alpha$$

In the intervals R < (1/r) and r < R, the dash-dot line satisfies the following equation for amplification rate (attenuation rate) G.

$$G = \{r \times (R/r)\}\char`\^\alpha = (r)\char`\^\alpha \times (R/r)\char`\^b$$

Note that by setting b to a value smaller than $\alpha$, in the vicinity of R = 1.0, amplification rate (attenuation rate) G realizes a trend close to G = R^$\alpha$, that is, the correct trend, while outside the vicinity of R = 1.0, it becomes monotonic amplification (monotonic attenuation), and can avoid steep variation.

The dash-dot line in FIG. 18 satisfies the conditions r = 1.3 and b = 2.0. However, in this dash-dot line, at R = r and R = 1/r, the amplification and attenuation trends change discontinuously. For this reason, a sense of incongruity may occur in the vicinity of R = r and in the vicinity of R = 1/r.

Therefore, instead of making b a constant, the value of b may be the same as $\alpha$ at the position R = r, and may gradually become smaller than the value of $\alpha$ as R increases. In the intervals R < (1/r) and r < R, the solid line in FIG. 18 satisfies the following equation for amplification rate (attenuation rate) G.

$$G = (r)\char`\^\alpha \times (R/r)\char`\^b \text{ where } b = \alpha\char`\^(r/R)$$

By increasing or decreasing the loudness according to the solid line in FIG. 18, the loudness can be sensitively varied according to subtle variations in wind speed (slight variations in the vicinity of R = 1), and rapid variations in loudness due to increases or decreases in R can be avoided.

The value of $\alpha$ may be arbitrarily settable by a user (for example, a creator of content executed in the virtual space) of acoustic signal processing device 100. That is, input interface 150 may receive an input operation specifying a value of $\alpha$ from the creator, and processor 120 may determine the value specified by the received input operation as the value of $\alpha$. The value of $\alpha$ may be set to 0.7, 1.0, 1.5, or 2.0, which significantly differ from academically correct values, but serve as values for producing increases and decreases in loudness of "seemingly appropriate" aerodynamic sound in the virtual space, thereby avoiding steep variation. The values of the above-mentioned r and b may also be determined similarly.

In Operation Example 1, the aerodynamic sound data was processed so that the frequency component changes, and in Operation Example 2, the aerodynamic sound data was processed so that the amplitude value changes, but the present disclosure is not limited to these examples. For example, the aerodynamic sound data may be processed so that the phase of the waveform changes. In such cases, processor 120 processes the sound data to change the phase of the waveform according to the value indicated by the determined smooth function.

It is sufficient so long as at least one of the frequency component, the phase, or the amplitude value of the waveform is changed. For example, two of the frequency component, the phase, and the amplitude value of the waveform may be changed, or all of the frequency component, the phase, and the amplitude value of the waveform may be changed.

In Operation Examples 1 and 2, processor 120 may divide the sound data (aerodynamic sound data) indicating the waveform of the reference sound obtained by obtainer 110 into processing frames F of predetermined time, and process the sound data for each divided processing frame F.

FIG. 19 illustrates divided aerodynamic sound data according to the present embodiment. FIG. 19 illustrates aerodynamic sound data divided into a plurality of processing frames F. Predetermined time Ts of each of the plurality of processing frames F may be the same, or as illustrated in FIG. 19, may be different from each other. Stated differently, FIG. 19 illustrates processing frames F1 to F6, each of which is one example of processing frame F, and predetermined times Ts1 to Ts6, each of which is one example of predetermined time Ts. Predetermined times Ts1 to Ts6 are mutually different.

In Operation Examples 1 and 2, the smooth function illustrated in FIG. 13 is used as the simulated information, but a different smooth function may be used.

For example, in step S30 of Operation Examples 1 and 2, processor 120 determines, as simulated information in which variation of natural phenomena has been simulated, a smooth function in which variation of the wind speed has been simulated. Here, processor 120 may determine the smooth function such that parameters specifying the smooth function change irregularly. Further, processor 120 determines parameters specifying the smooth function for each divided processing frame F. Stated differently, for example, processor 120 determines parameters specifying the smooth function corresponding to processing frame F1 illustrated in FIG. 19. Similarly, processor 120 determines parameters specifying the smooth function corresponding to processing frame F2, parameters specifying the smooth function corresponding to processing frame F3, parameters specifying the smooth function corresponding to processing frame F4, parameters specifying the smooth function corresponding to processing frame F5, and parameters specifying the smooth function corresponding to processing frame F6.

Further, processor 120 determines the smooth function for each divided processing frame F such that the value of smooth function becomes 1.0 at the start time and the end time of processing frame F. For example, in the smooth function corresponding to processing frame F2 of predetermined time Ts2, the value indicated by the smooth function is 1.0 at time t2 and time t3.

As illustrated in FIG. 13, when the smooth function is denoted as F(t), F(t) is expressed by the following equation.

$$F(t) = H \times \{sin[2\pi \times (t/T)^{(x)}]\}^{(y)} + 1.0$$

(where $0.0 \leq t < T$)

One example of a parameter that specifies the smooth function is the time from the start time of processing frame F to the end time of processing frame F, which is T in the above equation. For example, in the smooth function corresponding to processing frame F2 illustrated in FIG. 19, it is the time from time t2 to time t3. Stated differently, when the smooth function is a sine curve, this parameter corresponds to one period.

Another example of a parameter that specifies the smooth function is a value related to the maximum value of the smooth function, which is H in the above equation. As shown in the present embodiment, when the smooth function is a sine curve, another example of this parameter can also be said to be a value that determines the maximum value of the smooth function.

Another example of a parameter that specifies the smooth function is a parameter that varies the position where the smooth function reaches its maximum value, which is x in the above equation.

Another example of a parameter that specifies the smooth function is a parameter that varies the steepness of variation of the smooth function, which is y in the above equation.

Processor 120 determines the smooth function by determining these parameters such that the parameters change irregularly. For example, processor 120 may determine the parameters based on random numbers.

For example, processor 120 may include a random number sequence generator, and processor 120 may change the parameters according to the output number sequence. Here, a true random number sequence is inherently something that has neither regularity nor reproducibility. However, since it is difficult to realize this on a computer, the number sequence generated by the above-mentioned random number sequence generator may be a pseudo-random number sequence generated by a deterministic calculation process. For example, a pseudo-random number sequence generated by the rand() function in the C language may be used, or any other known algorithm for generating pseudo-random numbers may be used. A finite-length random number sequence, a finite-length pseudo-random number sequence, or a finite-length number sequence created to produce a sense of irregularity may be stored in storage 140, and it may be used repeatedly as a long-term pseudo-random number sequence.

Input interface 150 may also receive an input operation specifying a value of a parameter from a user (for example, a creator of content executed in the virtual space) of acoustic signal processing device 100. Processor 120 may determine the value specified by the input operation received by input interface 150 as the parameter.

FIG. 20 illustrates other examples of two smooth functions according to the present embodiment. In FIG. 20, (a) and (b) each illustrate smooth functions determined such that parameters specifying the smooth function change irregularly.

Here, the parameters may be determined to simulate the characteristics of the wind speed of wind W. As described above, fluctuations are included in the variation of the wind speed of wind W, that is, in real space, the wind speed is not constant, but varies while fluctuating. For example, after blowing at a first wind speed toward the listener L, wind W may also blow at a second wind speed different from the first wind speed. Thus, the parameters may be determined to simulate the characteristic that the wind speed varies while fluctuating.

The maximum value of the smooth function may be a value that does not exceed 3, and the minimum value of the smooth function may be a value that is not less than 0. Stated differently, the value indicated by the smooth function may be a value that is greater than or equal to 0 and less than or equal to 3. The parameters may be determined such that the value indicated by the smooth function is as described above.

The reasons why the maximum value of the smooth function may be a value that does not exceed 3 are as follows. In real space, fluctuations are included in the variation of the wind speed of wind W, and there may be cases where wind W blows with a strong instantaneous wind speed (momentary wind speed). The wind speed is, for example, 10-minute average wind speed, and the momentary wind speed is, for example, 3-second average wind speed. In such cases, it is known that momentary wind speed becomes approximately 1.5 to 3 times the wind speed. The value indicated by the smooth function is the ratio between the wind speed of the aerodynamic sound as the reference sound and the wind speed of the aerodynamic sound indicated by the sound data after processing. By setting the maximum value of the smooth function to 3 or less, wind W with a strong wind speed that blows momentarily (momentary wind speed), more specifically, the aerodynamic sound caused by said wind W can be reproduced in a virtual space.

The wind speed of wind W is defined as Va, and the momentary wind speed of wind W is defined as Vp. In such cases, processor 120 determines the smooth function such that the maximum value of the smooth function becomes Vp/Va. More specifically, processor 120 determines parameters specifying the smooth function such that the maximum value of the smooth function becomes Vp/Va. For example, input interface 150 receives an instruction specifying Va, which is the wind speed of wind W, and Vp, which is the momentary wind speed of wind W, and processor 120, in accordance with the received instruction, determines parameters specifying the smooth function such that the maximum value of the smooth function becomes Vp/Va.

Note that at this time, an image may be displayed on the display included in acoustic signal processing device 100, where the image includes one or more words representing the strength of wind W associated with the wind speed and momentary wind speed of wind W indicated by those words. In this image, for example, when the one or more words are "moderately strong wind", a wind speed of "greater than or equal to 10 and less than 15 (m/s)" and a momentary wind speed of "20 (m/s)" are associated. In this image, for example, when the one or more words are "strong wind", a wind speed of "greater than or equal to 15 and less than 20 (m/s)" and a momentary wind speed of "30 (m/s)" are associated.

A user (for example, a creator of content executed in the virtual space) of acoustic signal processing device 100 visually recognizes the image displayed on the display. Input interface 150 receives an instruction from the user specifying one or more words representing the strength of wind W. Processor 120 determines the wind speed and momentary wind speed associated with the one or more words specified by the received instruction as Va and Vp, respectively, and determines parameters specifying the smooth function such that the maximum value of the smooth function becomes Vp/Va.

In this case as well, wind W with a strong wind speed that blows momentarily (momentary wind speed), more specifically, the aerodynamic sound caused by said wind W can be reproduced in a virtual space.

Processor 120 divides the aerodynamic sound data into processing frames F of predetermined time. The average value of the predetermined time may be 3 seconds. As described above, the momentary wind speed is, for example, 3-second average wind speed. Accordingly, by setting the average value of the predetermined time to 3 seconds, the predetermined time can be correlated with the time for measuring the momentary wind speed (i.e., 3 seconds), and wind W with a strong wind speed that blows momentarily (momentary wind speed) in the virtual space can be made closer to wind blowing in real space.

Here, the smooth function when the above four parameters change will be described in greater detail with reference to FIG. 21.

FIG. 21 illustrates an example where parameters for specifying a smooth function according to the present embodiment have changed. (a) in FIG. 21 illustrates the same smooth function as in FIG. 13. (b) in FIG. 21 illustrates a smooth function where T in the above equation has changed. (c) in FIG. 21 illustrates a smooth function where H in the above equation has changed. (d) in FIG. 21 illustrates a smooth function where x in the above equation has changed. (e) in FIG. 21 illustrates a smooth function where y in the above equation has changed.

In the above Operation Examples 1 and 2, the processed aerodynamic sound data was output to a single output channel, namely headphones 200, but the present disclosure is not limited to this example. For example, the processed aerodynamic sound data may be output to each of a first output channel and a second output channel. The first output channel outputs aerodynamic sound to one ear of listener L, and the second output channel outputs aerodynamic sound to the other ear of listener L.

In such cases, processor 120 determines a first parameter and a second parameter that respectively specify smooth functions. Processor 120 processes the obtained sound data (aerodynamic sound data) to change at least one of the frequency component, phase, or amplitude value of the waveform based on a smooth function specified by a first parameter determined by processor 120. Let this processed aerodynamic sound data be aerodynamic sound data A. Processor 120 processes the obtained sound data (aerodynamic sound data) to change at least one of the frequency component, phase, or amplitude value of the waveform based on a smooth function specified by a second parameter determined by processor 120. Let this processed aerodynamic sound data be aerodynamic sound data B.

Outputter 130 outputs the sound data (aerodynamic sound data A) processed based on a smooth function specified by the determined first parameter to the first output channel. Outputter 130 outputs the sound data (aerodynamic sound data B) processed based on a smooth function specified by the determined second parameter to the second output channel.

FIG. 22 illustrates other examples of two smooth functions according to the present embodiment. (a) in FIG. 22 illustrates a smooth function specified by the first parameter, and (b) in FIG. 22 illustrates a smooth function specified by the second parameter. Here, the first output channel is a channel for output to the right ear, and the second output channel is a channel for output to the left ear.

This allows for different aerodynamic sound data to be output for each output channel.

Here, the first parameter and the second parameter may be determined to simulate the characteristics of the direction (wind direction) of wind W. As described above, fluctuations are included in the variation of the direction (wind direction) of wind W, that is, in real space, the wind direction is not constant, but varies while fluctuating. For example, after blowing from the right side of listener L, wind W may also blow from the front of listener L. Thus, the first parameter and the second parameter may be determined to simulate the characteristic that the wind direction varies while fluctuating.

Variation of Embodiment 1

Hereinafter, a variation of Embodiment 1 will be described. The following description will focus on the differences from Embodiment 1, and description of points in common will be omitted or simplified.

Configuration

First, the configuration of acoustic signal processing device 100a according to the present variation will be described. FIG. 23 is a block diagram illustrating the functional configuration of acoustic signal processing device 100a according to the present variation.

Acoustic signal processing device 100a according to the present variation has the same configuration as acoustic signal processing device 100 according to Embodiment 1, except that it includes processor 120a instead of processor 120.

Processor 120a includes first processor 121 and second processor 122.

First processor 121 performs the processing of step S30 explained in FIG. 14. Second processor 122 performs the following processing based on a value indicated by the smooth function determined by first processor 121.

FIG. 24 is a block diagram illustrating the functional configuration of second processor 122 according to the present variation. Second processor 122 includes sampling rate converter 1001, rearranger 1002, and connector 1003.

Sampling rate converter 1001 obtains sound data (aerodynamic sound data) indicating the waveform of the reference sound and a value indicated by the smooth function determined by first processor 121.

Sampling rate converter 1001 converts the sampling rate of the aerodynamic sound data for each processing frame F based on a value indicated by the obtained smooth function. When the sampling rate of the aerodynamic sound data is Fs, the interval between sample points (sampling interval) of the aerodynamic sound data before processing (for example, aerodynamic sound data D1 before processing illustrated in FIG. 15) becomes 1/Fs seconds.

When the value indicated by smooth function becomes 0.5, sampling rate converter 1001 upsamples the aerodynamic sound data such that sampling interval becomes 0.5 times (1/(2·Fs)), that is, sampling rate becomes 2·Fs. When the value indicated by smooth function becomes 2, sampling rate converter 1001 downsamples the aerodynamic sound data such that sampling interval becomes 2 times (2/Fs), that is, sampling rate becomes Fs/2. The sampling rate converter outputs the sampling rate converted aerodynamic sound data to rearranger 1002.

Rearranger 1002 performs processing to return the interval between the aerodynamic sound data after sampling rate conversion and the aerodynamic sound data after sampling rate conversion to Fs. As a result of this processing, when the value indicated by the smooth function takes a value greater than 1, the aerodynamic sound data is played back at a faster speed. When the value indicated by the smooth function is less than 1, the aerodynamic sound data is played back at a slower speed. Accordingly, this enables the frequency component of the aerodynamic sound data to shift to a higher range or shift to a lower range, making it possible to generate aerodynamic sound with a natural fluctuation that can be perceived. Next, rearranger 1002 outputs the aerodynamic sound data with rearranged sample point positions to connector 1003.

Connector 1003 performs processing to inhibit the occurrence of discontinuities between processing frames F. Next, this processing performed using two processing frames F will be described. The two processing frames F are the previous processing frame and the current processing frame. The current processing frame is processing frame F that is the target of processing by processor 120 at the time in question, and the previous processing frame is processing frame F immediately preceding the current processing frame.

Connector 1003 performs windowed addition processing on a plurality of sample points that are temporally positioned at the end of the rearranged aerodynamic sound data generated from aerodynamic sound data of the previous processing frame, and a plurality of sample points that are temporally positioned at the beginning of the rearranged aerodynamic sound data generated from the aerodynamic sound data of the current processing frame. As a result of this processing, discontinuities between processing frames F caused by variation in the value indicated by the smooth function are avoided.

FIG. 25 illustrates aerodynamic sound data according to the present variation. FIG. 26 is a conceptual diagram of processing performed by second processor 122 according to the present variation. The aerodynamic sound data is processed in units of processing frames F. Also, two adjacent processing frames F are set to partially overlap each other. This is to perform windowed addition on one or more sample points positioned at the end of the plurality of sample points after rearrangement of the previous processing frame and one or more sample points positioned at the beginning of the plurality of sample points after rearrangement of the current processing frame, in order to avoid the occurrence of discontinuities. For example, as illustrated in FIG. 25, two adjacent processing frames Fn and Fn+1 partially overlap each other. More specifically, during the time from time t14 to time t13, the two processing frames Fn and Fn+1 overlap. Processing frame Fn corresponds to the previous processing frame, and processing frame Fn+1 corresponds to the current processing frame.

An example will be described where the sampling rate of the aerodynamic sound data is Fs, the value indicated by the smooth function for processing frame Fn is 0.5, and the value indicated by the smooth function for processing frame Fn+1 is 0.75. In processing frame Fn, since the value indicated by the smooth function is 0.5, sampling rate conversion is performed such that the sampling rate becomes $2 \cdot Fs$ (sampling interval becomes $1/(2 \cdot Fs)$). Rearranger 1002 then performs rearrangement of the sample point positions after sampling rate conversion such that the sampling interval becomes 1/Fs, that is, returns to the original state. Therefore, the time length of the sample points after rearrangement becomes twice the time length of the sample points of the aerodynamic sound data converted by sampling rate converter 1001.

Processing is performed to carry out windowed addition on one or more sample points positioned at the end of the plurality of sample points after rearrangement and one or more sample points positioned at the beginning of the plurality of sample points after rearrangement of the current processing frame, and the result is output. In this example, since the value indicated by the smooth function in processing frame n+1 is 0.75, the time length of the sample points after rearrangement becomes 4/3 times the time length of the sample points of the aerodynamic sound data converted by sampling rate converter 1001. Sample points after rearrangement in intervals where windowed addition is not performed are output as sound data as-is.

Here, sampling rate converter 1001 will be described in greater detail with reference to FIG. 27.

FIG. 27 is a block diagram illustrating the functional configuration of sampling rate converter 1001 according to the present variation. Sampling rate converter 1001 includes up-sampler 1021, low-pass filter 1022, down-sampler 1023, and XY setter 1024.

Up-sampler 1021 obtains sound data (aerodynamic sound data), and XY setter 1024 obtains a value indicated by the smooth function. XY setter 1024 sets an up-sample value X used in up-sampler 1021 and a down-sample value Y used in down-sampler 1023. Here, when the up-sample value is X, up-sampler 1021 up-samples the aerodynamic sound data by a factor of X. Here, when the down-sample value is Y, down-sampler 1023 down-samples the aerodynamic sound data by a factor of 1/Y. XY setter 1024 determines the settings of X and Y such that Y/X becomes the value indicated by the smooth function, and X and Y are the smallest integers among the combinations of X and Y. For example, when the value indicated by the smooth function is 0.5, (X, Y) = (2, 1), when the value indicated by the smooth function is 0.75, (X, Y) = (4, 3), and when the value indicated by the smooth function is 1.5, (X, Y) = (2, 3). When X = 1, up-sampler 1021 does not perform up-sampling processing and the aerodynamic sound data is output as-is, and when Y = 1, down-sampler 1023 does not perform down-sampling processing and the aerodynamic sound data is output as-is.

Up-sampler 1021 inserts X-1 zero values between sample points. Down-sampler 1023 outputs sample points by thinning out every Y-th point. Low-pass filter 1022 performs the following processing to prevent the occurrence of aliasing distortion. Here, the sampling rate of the aerodynamic sound data is defined as Fs, and the sampling rate of the aerodynamic sound data after sampling rate conversion is defined as Fs'. Low-pass filter 1022 processes the aerodynamic sound data output from up-sampler 1021 with a low-pass filter characterized by a cutoff frequency of min(Fs, Fs')/2.

Next, a temporal variation pattern of the value indicated by the smooth function will be exemplified. Here, the value indicated by the smooth function is expressed as any one of five values. Variation Pattern 1 and Variation Pattern 2 will be described.

In Variation Pattern 1, the value indicated by the smooth function becomes any one of the values 0.25, 0.5, 1, 2, or 4. In Variation Pattern 2, the value indicated by the smooth function becomes any one of the values 0.5, 0.75, 1, 1.5, or 2. The values that can be taken by the value indicated by the smooth function, or the number of values that can be taken, are not limited to those exemplified here.

FIG. 28 is a state transition diagram of values indicated by a smooth function according to the present variation. That is, FIG. 28 illustrates the temporal transition of values indicated by the smooth function. Each circle represents a state, and when in the state of p(0), p(0) is output as the value indicated by the smooth function. Moreover, a(e, f) indicates the probability of transitioning from state e to state f. To represent natural sound fluctuations, it is desirable to have a configuration that allows transitions only to one's own state or adjacent states, as in this example. However, depending on the application, intense fluctuations may be desirable in some cases, so transitions may be defined in any manner, not limited to this example.

In the present variation, processing may be performed to apply variation to the amplitude values of the aerodynamic sound data obtained by sampling rate converter 1001.

FIG. 29 is a block diagram illustrating another functional configuration of acoustic signal processing device 100a according to the present variation. Here, processor 120a of acoustic signal processing device 100a includes second processor 122b instead of second processor 122. Second processor 122b includes sampling rate converter 1001, amplitude adjuster 1031, rearranger 1002, and connector 1003.

FIG. 29 illustrates amplitude adjuster 1031 arranged downstream of sampling rate converter 1001. This amplitude adjuster 1031 modifies the amplitude values of the aerodynamic sound data after sampling rate conversion output from sampling rate converter 1001 so that the amplitude values fluctuate. As a modification method, for example, the values may be temporally varied according to a state transition diagram of values indicated by the smooth function as illustrated in FIG. 28. The amplitude values may be modified by multiplying the aerodynamic sound data by any one of a plurality of amplitude variation patterns prepared in advance.

Amplitude adjuster 1031 may be arranged subsequent to rearranger 1002, or may be arranged subsequent to connector 1003.

[Embodiment 2]

Hereinafter, Embodiment 2 will be described. The following description will focus on the differences from Embodiment 1 and the variation, and description of points in common will be omitted or simplified.

Configuration

First, the configuration of information processing device 600 according to the present embodiment will be described. FIG. 30 is a block diagram illustrating the functional configuration of information processing device 600 according to the present embodiment.

Information processing device 600 includes circular address unit 610, frequency shifter 620, storage 630, interval specifier 640, crossfader 650, and readout controller 660.

When the time length of the aerodynamic sound data is short and this aerodynamic sound data is repeatedly used, issues such as noise occurring at the joints between aerodynamic sound data may arise. Information processing device 600 according to the present embodiment is used to overcome at least one of these issues.

FIG. 31 is a diagram for explaining the readout of sound data according to a conventional technique and the readout of sound data according to the present embodiment. In FIG. 31, (a) is a diagram for explaining the readout of sound data according to the conventional technique, and (b) is a diagram for explaining the readout of sound data according to the present embodiment.

The readout of sound data (aerodynamic sound data) according to the conventional technique will be described. In the conventional technique, storage in which aerodynamic sound data is stored is provided, and the circular address unit circulates from the start address at which the aerodynamic sound data is stored in the storage to the end address at which the aerodynamic sound data is stored. The circular address unit reads out the aerodynamic sound data from the storage and outputs it.

Next, the readout of sound data (aerodynamic sound data) according to the present embodiment will be described.

Here, the aerodynamic sound data (for example, aerodynamic sound data D1 before processing illustrated in FIG. 15) includes a plurality of sample points, and more specifically, includes N sample points as illustrated in (b) in FIG. 31. Here, the first M sample points and the last M sample points of the aerodynamic sound data are pre-crossfaded, and M sample points that have been crossfaded are created. Also, (N-2M) samples of the middle portion, with the first M sample points and the last M sample points of the aerodynamic sound data removed, are created.

Storage 630 according to the present embodiment stores aerodynamic sound data including (N-M) samples that are combined from M sample points that have been crossfaded and (N-2M) samples of the middle portion. This storage 630 includes (N-M) consecutive addresses set corresponding to the aerodynamic sound data including (N-M) samples.

In the present embodiment, circular address unit 610 circulates from the start address to the end address of the aerodynamic sound data including (N-M) samples stored in storage 630, reads out the aerodynamic sound data, and outputs it to frequency shifter 620. Frequency shifter 620 obtains the output aerodynamic sound data, shifts its frequency, and outputs it to an output channel such as headphones 200 according to Embodiment 1, for example.

In information processing device 600 according to the present embodiment, since the first M sample points and the last M sample points are crossfaded, issues such as noise occurring at the joints between aerodynamic sound data are less likely to arise.

Information processing device 600 according to the present embodiment may further perform the following processing. FIG. 32 is for explaining processing performed by information processing device 600 according to the present embodiment.

In FIG. 32, (a) illustrates the configuration of storage 630 according to the present embodiment. Here, storage 630 stores aerodynamic sound data (for example, aerodynamic sound data D1 before processing illustrated in FIG. 15), and is also provided with first pointer Pt1 and second pointer Pt2. First pointer Pt1 indicates the read position for reading out the stored aerodynamic sound data. Second pointer Pt2 is a pointer that moves in conjunction with first pointer Pt1, and indicates the read position for reading out aerodynamic sound data from storage 630.

Interval specifier 640 specifies first interval A1 and second interval A2. Second interval A2 is the subsequent interval adjacent to first interval A1. Second pointer Pt2 moves through subsequent interval A3 adjacent to second interval A2.

Note that first interval A1 and second interval A2 may be arbitrarily settable by a user of information processing device 600. That is, an input interface included in information processing device 600 may receive an input operation specifying first interval A1 and second interval A2 from the user, and interval specifier 640 may determine the intervals specified by the received input operation as first interval A1 and second interval A2.

Crossfader 650 performs fade-in processing on the aerodynamic sound data read from the read position indicated by first pointer Pt1, and outputs the fade-in processed aerodynamic sound data. Crossfader 650 performs fade-out processing on the aerodynamic sound data read from the read position indicated by second pointer Pt2, and outputs the fade-out processed aerodynamic sound data.

Readout controller 660 causes crossfader 650 to output fade-in processed aerodynamic sound data while the read position indicated by first pointer Pt1 is included in first interval A1 and aerodynamic sound data is being read out from first interval A1. Readout controller 660 outputs aerodynamic sound data read out from second interval A2 by circular address unit 610 while the read position indicated by first pointer Pt1 is not included in first interval A1 and aerodynamic sound data is not being read out from first interval A1.

The fade-in processed aerodynamic sound data output by crossfader 650, or the aerodynamic sound data read from second interval A2 by circular address unit 610, is output to frequency shifter 620. Frequency shifter 620 obtains the fade-in processed aerodynamic sound data that has been output, or the aerodynamic sound data read from second interval A2, shifts its frequency, and outputs it to an output channel such as headphones 200 according to Embodiment 1, for example.

Next, processing shown in (b) and (c) in FIG. 32 will be described.

In FIG. 32, (b) illustrates an example of first pointer Pt1 according to the present embodiment circulating through first interval A1 and second interval A2. In this example, first pointer Pt1 circulates through first interval A1 and second interval A2. While the read position indicated by first pointer Pt1 is included in first interval A1, aerodynamic sound data is read out from the read position indicated by first pointer Pt1, and aerodynamic sound data is also read out from the read position indicated by second pointer Pt2 which operates in conjunction with first pointer Pt1. Crossfader 650 performs cross-fade processing on the two read aerodynamic sound data. Note that during the time the read position indicated by first pointer Pt1 is included in first interval A1, the read position indicated by second pointer Pt2, which operates in conjunction with first pointer Pt1, may be included in interval A3 which moves in conjunction with first interval A1, and aerodynamic sound data may also be read out from interval A3.

In FIG. 32, (c) illustrates an example of second pointer Pt2 according to the present embodiment circulating through second interval A2 and interval A3. In this example, second pointer Pt2 circulates through second interval A2 and interval A3. While the read position indicated by second pointer Pt2 is included in interval A3, aerodynamic sound data is read out from the read position indicated by second pointer Pt2, and aerodynamic sound data is also read out from the read position indicated by first pointer Pt1. Crossfader 650 performs cross-fade processing on the two read aerodynamic sound data. Note that during the time the read position indicated by second pointer Pt2 is included in second interval A2, the read position indicated by first pointer Pt1, which operates in conjunction with second pointer Pt2, may be included in first interval A1, and aerodynamic sound data may also be read out from first interval A1.

Information processing device 600 according to the present embodiment may further perform the following processing. FIG. 33 is for explaining other processing performed by information processing device 600 according to the present embodiment.

In this other process, interval specifier 640 randomly updates first interval A1 and second interval A2. Interval specifier 640 sequentially updates the position of the endpoint of second interval A2 and the positions of the start point and endpoint of next first interval A1.

In the other process illustrated in FIG. 33, the state in which aerodynamic sound data is read out transitions in the order of (a) in FIG. 33, (b) in FIG. 33, (c) in FIG. 33, (d) in FIG. 33, (e) in FIG. 33, (f) in FIG. 33, and (g) in FIG. 33.

(a), (d), and (g) in FIG. 33 each illustrate State 1 in which aerodynamic sound data is read out, (b) and (e) in FIG. 33 each illustrate State 2 in which aerodynamic sound data is read out, and (c) and (f) in FIG. 33 each illustrate State 3 in which aerodynamic sound data is read out.

In FIG. 33, State 1, State 2, and State 3 are repeated in this order.

In FIG. 33, (a) illustrates State 1 in which aerodynamic sound data is being read out from second interval A2. Here, the endpoint of second interval A2 is not determined.

In FIG. 33, (b) illustrates State 2 in which aerodynamic sound data is being read out from second interval A2. At a predetermined timing, interval specifier 640 randomly specifies the endpoint of second interval A2 and next first interval A1. Note that interval A3, which moves in conjunction with next first interval A1, is automatically determined without needing to be specified by interval specifier 640, as it is the subsequent interval adjacent to second interval A2.

Note that the predetermined timing may be arbitrarily settable by a user of information processing device 600.

That is, an input interface included in information processing device 600 may receive an input operation specifying a predetermined timing from the user, and interval specifier 640 may determine the timing specified by the received input operation as the predetermined timing.

In FIG. 33, (c) illustrates State 3 in which reading out of aerodynamic sound data from second interval A2 has been completed. Crossfader 650 performs cross-fade processing on the aerodynamic sound data read from the next first interval A1, and the aerodynamic sound data read from interval A3 which moves in conjunction with the next first interval A1.

In FIG. 33, (d) illustrates State 1 in which aerodynamic sound data is being read out from the next second interval A2. Note that this next second interval A2 is automatically determined without interval specifier 640 needing to specify its start point, as it is the subsequent interval adjacent to next first interval A1 shown in (c) in FIG. 33. Stated differently, when the cross-fade processing explained using (c) in FIG. 33 is completed, aerodynamic sound data is read out from this next second interval A2. Here, as in State 1 shown in (a) in FIG. 33, the endpoint of second interval A2 is not determined.

In FIG. 33, (e) illustrates State 2 in which aerodynamic sound data is being read out from second interval A2 (corresponding to the next second interval A2 shown in (d) in FIG. 33). At a predetermined timing, interval specifier 640 randomly specifies the endpoint of this second interval A2 and next first interval A1. Note that interval A3, which moves in conjunction with next first interval A1, is automatically determined without needing to be specified by interval specifier 640, as it is the subsequent interval adjacent to second interval A2.

In FIG. 33, (f) illustrates State 3 in which reading out of aerodynamic sound data from second interval A2 (corresponding to the next second interval A2 shown in (e) in FIG. 33) has been completed. Crossfader 650 performs cross-fade processing on the aerodynamic sound data read from the next first interval A1, and the aerodynamic sound data read from interval A3 which moves in conjunction with the next first interval A1.

In FIG. 33, (g) illustrates State 1 in which aerodynamic sound data is being read out from the next second interval A2. Note that this next second interval A2 is automatically determined without interval specifier 640 needing to specify its start point, as it is the subsequent interval adjacent to next first interval A1 shown in (f) in FIG. 33. Stated differently, when the cross-fade processing explained using (c) in FIG. 33 is completed, aerodynamic sound data is read out from this next second interval A2. Here, as in State 1 shown in (a) in FIG. 33, the endpoint of second interval A2 is not determined.

As illustrated in FIG. 33, State 1, State 2, and State 3 are repeated in this order, and in State 2, the endpoint of second interval A2 and next first interval A1 are randomly specified, thereby preventing listener L from repeatedly listening to the same aerodynamic sound. Accordingly, an unnatural "rhythm" caused by repeating the same aerodynamic sound is not generated.

Next, pipeline processing will be described.

Some or all of the processing performed by acoustic signal processing device 100 described above may be carried out as part of pipeline processing as described in, for example, PTL 2. FIG. 34 illustrates one example of a functional block diagram and steps for explaining a case where renderers A0203 and A0213 of FIG. 6 and FIG. 7 perform pipeline processing. Renderer 900, which is one example of renderers A0203 and A0213 of FIG. 6 and FIG. 7, will be used for the explanation of FIG. 34.

Pipeline processing refers to dividing the processing for applying sound effects into a plurality of processes and executing each process one by one in order. The divided processes include, for example, signal processing on the audio signal, generation of parameters used for signal processing, etc.

Renderer 900 according to the present embodiment includes, as pipeline processing, processes that apply effects such as reverberation effect, early reflection processing, distance attenuation effect, and binaural processing. However, the above-described processing is one example, and may include other processes, or may omit some of the processes. For example, renderer 900 may include diffraction processing or occlusion processing as pipeline processing, or reverberation processing may be omitted if it is unnecessary. Each process may be expressed as a stage, and the audio signals such as reflected sounds generated as a result of each process may be expressed as rendering items. The order of each stage in the pipeline processing and the stages included in the pipeline processing are not limited to the example illustrated in FIG. 34.

Note that renderer 900 need not include all stages illustrated in FIG. 34, and some stages may be omitted or other stages may be outside of renderer 900.

As one example of pipeline processing, processing performed in each of reverberation processing, early reflection processing, distance attenuation processing, selection processing, generation processing, and binaural processing will be described. In each processing, the metadata included in the input signal is analyzed, and parameters necessary for generating reflected sounds are calculated.

In FIG. 34, renderer 900 includes reverberation processor 901, early reflection processor 902, distance attenuation processor 903, selector 904, calculator 906, generator 907, and binaural processor 905. Here, an example will be described in which reverberation processor 901 performs a reverberation processing step, early reflection processor 902 performs an early reflection processing step, distance attenuation processor 903 performs a distance attenuation processing step, selector 904 performs a selection processing step, and binaural processor 905 performs a binaural processing step.

In the reverberation processing step, reverberation processor 901 generates an audio signal indicating reverberation sound or parameters necessary for generating the audio signal. Reverberation sound is a sound that includes reverberation sound reaching the listener as reverberation after the direct sound. As one example, the reverberation sound is reverberation sound that reaches the listener at a relatively late stage (for example, approximately a few hundred ms after the arrival of the direct sound) after the early reflected sound (to be described later) reaches the listener, and after undergoing more reflections (for example, several tens of times) than the early reflected sound. Reverberation processor 901 refers to the audio signal and spatial information included in the input signal, and performs calculations using a prepared, predetermined function for generating reverberation sound.

Reverberation processor 901 may generate reverberation by applying a known reverberation generation method to the sound signal. One example of a known reverberation generation method is the Schroeder method, but the method used is not limited to this example. Reverberation processor 901 uses the shape and an acoustic property of a sound reproduction space indicated by the spatial information when the known reverberation generation processing is applied. Accordingly, reverberation processor 901 can calculate parameters for generating an audio signal that indicates reverberation.

In the early reflection processing step, early reflection processor 902 calculates parameters for generating early reflection sounds based on the spatial information. The early reflected sound is reflected sound that reaches the listener at a relatively early stage (for example, approximately several tens of ms after the arrival of the direct sound) after the direct sound from the sound source object reaches the listener, and after undergoing one or more reflections. Early reflection processor 902 references, for example, the sound signal and metadata, and calculates the path (path length) of reflected sound that reaches the listener after being reflected by objects, using the shape and size of the three-dimensional sound field (space), the positions of objects such as structures, and the reflectance of objects, from the sound source object. Early reflection processor 902 may calculate the path of the direct sound (path length). The information indicating said path may be used as a parameter for generating the early reflected sound, as well as a parameter for selection processing of reflected sound in selector 904.

In the distance attenuation processing step, distance attenuation processor 903 calculates the loudness of sound reaching the listener based on the difference between the length of the direct sound path and the length of the reflected sound path calculated by early reflection processor 902. The loudness of sound reaching the listener attenuates in proportion to the distance to the listener (inversely proportional to the distance) relative to the loudness of the sound source. Therefore, the loudness of the direct sound can be obtained by dividing the loudness of the sound source by the length of the direct sound path, and the loudness of the reflected sound can be calculated by dividing the loudness of the sound source by the length of the reflected sound path.

In the selection processing step, selector 904 selects the sound to be generated. The selection processing may be executed based on parameters calculated in previous steps.

When the selection processing is executed as part of the pipeline processing, sounds that were not selected in the selection processing need not be subjected to processing subsequent to the selection processing in the pipeline processing. Not executing processing subsequent to the selection processing for sounds that were not selected enables a reduction in the computational load of acoustic signal processing device 100 more so than when it is decided to only not execute binaural processing for the sounds that were not selected.

When the selection processing described according to the present embodiment is executed as part of the pipeline processing, if the selection processing is set to be executed earlier in the order of the plurality of processes in the pipeline processing, more processing subsequent to the selection processing can be omitted, thereby enabling a greater reduction in the amount of computation. For example, if the selection processing is executed prior to the processing by calculator 906 and generator 907, processing for aerodynamic sound related to objects determined not to be selected can be omitted, enabling a further reduction in the amount of computation in acoustic signal processing device 100.

Parameters calculated as part of the pipeline processing for generating rendering items may be used by selector 904 or calculator 906.

In the binaural processing step, binaural processor 905 performs signal processing on the audio signal of the direct sound so that it is perceived as sound reaching the listener from the direction of the sound source object. Furthermore, binaural processor 905 performs signal processing so that the reflected sound is perceived as sound reaching the listener from the obstacle object involved in the reflection. Based on the coordinates and orientation of the listener in the sound space (i.e., the position and orientation of the listening point), processing is executed to apply HRIR (Head-Related Impulse Response) DB (Database) so that sound reaches the listener from the position of the sound source object or the position of the obstacle object. The position and direction of the listening point may be changed according to the movement of the listener's head, for example. Information indicating the position of the listener may be obtained from a sensor.

The program used for pipeline processing and binaural processing, spatial information necessary for acoustic processing, the HRIR DB, and other parameters such as threshold data are obtained from memory included in acoustic signal processing device 100 or from an external source. Head-Related Impulse Response (HRIR) is the response characteristic when one impulse is generated. Stated differently, HRIR is the response characteristic that is converted from an expression in the frequency domain to an expression in the time domain by Fourier transforming the head-related transfer function, which represents the change in sound caused by surrounding objects including the auricle, the head, and the shoulders as a transfer function. The HRIR DB is a database including such information.

As one example of pipeline processing, renderer 900 may include a processor (not illustrated). For example, renderer 900 may include a diffraction processor or an occlusion processor.

The diffraction processor executes processing to generate an audio signal indicating sound including diffracted sound caused by an obstacle between the listener and the sound source object in a three-dimensional sound field (space). Diffracted sound is sound that, when there is an obstacle between the sound source object and the listener, reaches the listener from the sound source object by going around the obstacle.

The diffraction processor references, for example, the sound signal and metadata, and calculates the path by which sound reaches the listener from the sound source object by detouring around the obstacle, using the position of the sound source object in the three-dimensional sound field (space), the position of the listener, and the position, shape, and size of the obstacle, etc., and generates diffracted sound based on the calculated path.

The occlusion processor generates an audio signal that seeps through when a sound source object is on the other side of an obstacle object, based on spatial information obtained in any step and information such as the material of the obstacle object.

In the above Embodiments 1 and 2, the position information assigned to the sound source object is defined as a "point" in the virtual space, and the details of the invention are described as being a so-called "point sound source". However, as a method for defining a sound source in the virtual space, a spatially extended sound source that is not a point sound source may be defined as an object having length, size, or shape. In such cases, since the distance between the listener and the sound source or the direction of sound arrival is not determined, the resulting reflected sound may be limited to the "selected" processing by selector 904 mentioned above, without analysis being performed, or regardless of the analysis results. This is because by doing so, it is possible to avoid the sound quality degradation that might occur by not selecting the reflected sound. Alternatively, a representative point such as the center of gravity of the object may be determined, and the processing of the present disclosure may be applied as if sound is generated from that representative point. In such cases, the processing of the present disclosure may be applied after adjusting a threshold in accordance with the information on the spatial extension of the sound source.

Next, an example structure of the bitstream will be described.

The bitstream includes, for example, an audio signal and metadata. The audio signal is sound data representing sound, indicating information such as the frequency and intensity of the sound. The spatial information included in the metadata is information related to the space in which the listener of the sound that is based on the audio signal is positioned. More specifically, the spatial information is information about a predetermined position (localization position) in the sound space (for example, within a three-dimensional sound field) when localizing the sound image of the sound at that predetermined position, that is, when causing the listener to perceive the sound as reaching from a predetermined direction. The spatial information includes, for example, sound source object information and position information indicating the position of the listener.

The sound source object information is information about an object indicating a physical object that generates sound based on the audio signal, i.e., reproduces the audio signal, and is information related to a virtual object (sound source object) placed in a sound space, which is a virtual space corresponding to the real space in which the physical object is placed. The sound source object information includes, for example, information indicating the position of the sound source object located in the sound space, information about the orientation of the sound source object, information about the directivity of the sound emitted by the sound source object, information indicating whether the sound source object belongs to an animate thing, and information indicating whether the sound source object is a mobile body. For example, the audio signal corresponds to one or more sound source objects indicated by the sound source object information.

As one example of the data structure of the bitstream, the bitstream includes, for example, metadata (control information) and an audio signal.

The audio signal and metadata may be stored in a single bitstream or may be separately stored in plural bitstreams. Similarly, the audio signal and metadata may be stored in a single file or may be separately stored in plural files.

The bitstream may exist for each sound source or may exist for each playback time. When bitstreams exist for each playback time, a plurality of bitstreams may be processed in parallel simultaneously.

Metadata may be assigned to each bitstream, or may be collectively assigned as information for controlling a plurality of bitstreams. The metadata may be assigned for each playback time.

When the audio signal and metadata are stored separately in a plurality of bitstreams or a plurality of files, the audio signal and metadata may be included in information indicating another bitstream or file relevant to one or some of the bitstreams or files, or the audio signal and metadata may be included in information indicating another bitstream or file relevant to each of all the bitstreams or files. Here, the relevant bitstream or file is, for example, a bitstream or file that may be used simultaneously during acoustic processing. The relevant bitstream or file may include a bitstream or file that collectively describes information indicating other relevant bitstreams or files. Here, information indicating other relevant bitstreams or files is, for example, an identifier indicating the other bitstream, a file name indicating the other file, a uniform resource locator (URL), or a uniform resource identifier (URI). In such cases, obtainer 110 identifies or obtains a bitstream or file based on information indicating other relevant bitstreams or files. The bitstream may include information indicating another bitstream relevant to the bitstream as well as information indicating a bitstream or file relevant to another bitstream or file within the bitstream. Here, the file including information indicating the relevant bitstream or file may be, for example, a control file such as a manifest file used for content distribution.

Note that the entire metadata or part of the metadata may be obtained from somewhere other than a bitstream of the audio signal. For example, metadata for controlling an acoustic sound or metadata for controlling a video may be obtained from somewhere other than from a bitstream or both may be obtained from somewhere other than from a bitstream. When metadata for controlling a video is included in a bitstream obtained by the audio signal reproduction system, the audio signal reproduction system may have a function of outputting metadata that can be used for controlling a video to a display device that displays images or to a stereoscopic video reproduction device that reproduces stereoscopic videos.

Next, examples of information included in the metadata will be described further.

The metadata may be information used to describe a scene expressed in the sound space. As used herein, the term "scene" refers to a collection of all elements that represent three-dimensional video and acoustic events in the sound space, which are modeled in the audio signal reproduction system using metadata. Thus, metadata as used herein may include not only information for controlling acoustic processing, but also information for controlling video processing. Of course, the metadata may include information for controlling only acoustic processing or video processing, or may include information for use in controlling both.

The audio signal reproduction system generates virtual acoustic effects by performing acoustic processing on the audio signal using the metadata included in the bitstream and additionally obtained interactive listener position information. Here, a case will be described where early reflection processing, obstacle processing, diffraction processing, occlusion processing, and reverberation processing are performed as sound effects, but other acoustic processing may be performed using the metadata. For example, the audio signal reproduction system may add acoustic effects such as distance decay effect, localization, and Doppler effect. Information for switching between on and off of all or one or more of the acoustic effects, and priority information may be added as metadata.

As an example, encoded metadata includes information about a sound space including a sound source object and an obstacle object and information about a localization position when the sound image of the sound is localized at a predetermined position in the sound space (i.e., the sound is perceived as reaching from a predetermined direction). Here, an obstacle object is an object that can influence a sound emitted by a sound source object and perceived by the listener, by, for example, blocking or reflecting the sound between the sound source object and the listener. An obstacle object can include an animal such as a person or a movable body such as a machine, in addition to a stationary object. When a plurality of sound source objects are present in a sound space, another sound source object may be an obstacle object for a certain sound source object. Non-sound-emitting objects such as building materials or inanimate objects, and sound source objects that emit sound can both be obstacle objects.

The metadata includes all or part of information indicating the shape of the sound space, geometry information and position information of obstacle objects present in the sound space, geometry information and position information of sound source objects present in the sound space, and the position and orientation of the listener in the sound space.

The sound space may be either a closed space or an open space. The metadata includes information indicating the reflectance of each structure that can reflect sound in the sound space, such as floors, walls, and ceilings, and the reflectance of each obstacle object present in the sound space. Here, the reflectance is an energy ratio between a reflected sound and an incident sound, and is set for each sound frequency band. Of course, the reflectance may be uniformly set, irrespective of the sound frequency band. When the sound space is an open space, for example, parameters such as a uniformly set attenuation rate, diffracted sound, and early reflected sound may be used.

In the above description, reflectance is mentioned as a parameter with regard to an obstacle object or a sound source object included in metadata, but the metadata may include information other than reflectance. For example, information other than reflectance may include information on the material of an object as metadata related to both of a sound source object and a non-sound-emitting object. More specifically, the information other than reflectance may include parameters such as diffusivity, transmittance, and sound absorption rate.

For example, information on a sound source object may include information for designating the loudness, a radiation property (directivity), a reproduction condition, the number and types of sound sources emitted by one object, and a sound source region of an object. The reproduction condition may determine that a sound is, for example, a sound that is continuously being emitted or is emitted at an event. The sound source region in the object may be determined based on the relative relationship between the position of the listener and the position of the object, or determined with respect to the object. When the sound source region in the object is determined based on the relative relationship between the position of the listener and the position of the object, with respect to the plane of the object the listener is looking at, the listener can be made to perceive that sound C is emitted from the right side of the object and sound E is emitted from the left side of the object as seen from the listener. When the sound source region in the object is determined based on the object as a reference, which sound is emitted from which region of the object can be fixed, irrespective of the direction in which the listener is viewing. For example, the listener can be made to perceive that high-pitched sound comes from the right side and low-pitched sound comes from the left side when looking at the object from the front. In such cases, if the listener goes around to the back of the object, the listener can be made to perceive that low-pitched sound comes from the right side and high-pitched sound comes from the left side when looking at the object from the back.

Metadata related to the space may include, for example, the time until early reflected sound, the reverberation time, and the ratio of direct sound to diffuse sound. When the ratio between a direct sound and a diffused sound is zero, the listener can be caused to perceive only a direct sound.

Advantageous Effects, etc.

An acoustic signal processing method according to Embodiment 1 includes: obtaining sound data indicating a waveform of a reference sound; processing the sound data to change at least one of a frequency component, a phase, or an amplitude value of the waveform based on simulated information in which variation of a natural phenomenon is simulated; and outputting the processed sound data.

As a result, the sound data is processed to change at least one of the frequency component, phase, or amplitude value of the waveform, based on simulated information in which variation of natural phenomena including fluctuations is simulated. Therefore, in the processed sound data, fluctuations occur in at least one of the frequency component, phase, or amplitude, and fluctuations also occur in at least one of the frequency component, phase, or amplitude of the sound indicated by the processed sound data. Accordingly, listener L is able to hear sound in which fluctuations occur in at least one of the frequency component, phase, or amplitude value, making it less likely for listener L to feel a sense of incongruity and allowing listener L to experience a sense of realism. Stated differently, an acoustic signal processing method capable of providing listener L with a sense of realism is realized.

In Operation Example 1 of Embodiment 1, an example of wind W blowing as a natural phenomenon was used. As described above, the simulated information is information in which variation of natural phenomena including fluctuations has been simulated, and more specifically, is information expressing fluctuations due to variation of the wind speed of wind W, and in Operation Example 1, is information indicated by a smooth function.

In Operation Example 1, sound data (aerodynamic sound data) indicating the waveform of the reference sound is processed so that the frequency component of the waveform changes based on simulated information in which variation of natural phenomena including fluctuations has been simulated. Therefore, fluctuations occur in the frequency component of the processed aerodynamic sound data, and fluctuations also occur in the frequency component of the aerodynamic sound indicated by the processed aerodynamic sound data. Accordingly, listener L is able to hear such aerodynamic sound in which fluctuations occur in the frequency component, making it less likely for listener L to feel a sense of incongruity and allowing listener L to experience a sense of realism. Stated differently, an acoustic signal processing method capable of providing listener L with a sense of realism is realized.

In Operation Example 1 of Embodiment 1, an example of wind W blowing was used as a natural phenomenon, but the present disclosure is not limited to this example; natural phenomena such as river water flowing or animal activity may be used.

When an example of river water flowing is used as a natural phenomenon, listener L will hear babbling sounds caused by river water flowing. In such cases, the simulated information is information expressing fluctuations due to variation in the flow velocity of river water, or variation in the direction of river water flow.

When an example of animal activity is used as a natural phenomenon, listener L will hear animal sounds such as animal calls. In such cases, the simulated information is information expressing fluctuations due to variation in the volume of animal calls.

Stated differently, even when phenomena such as river water flowing or animal activity are used as natural phenomena, the simulated information is information in which variation of natural phenomena including fluctuations has been simulated. Accordingly, as illustrated in Operation Example 1, by using simulated information, listener L is able to hear sound in which fluctuations occur in at least one of the frequency component, phase, or amplitude value, making it less likely for listener L to feel a sense of incongruity and allowing listener L to experience a sense of realism. Stated differently, an acoustic signal processing method capable of providing listener L with a sense of realism is realized.

In the acoustic signal processing method according to Embodiment 1, the reference sound is an aerodynamic sound generated by wind W, and in the processing, the sound data is processed to change at least one of the frequency component, the phase, or the amplitude value of the waveform based on the simulated information in which variation of wind speed of wind W is simulated.

With this, listener L is able to hear aerodynamic sound in which fluctuations occur in at least one of the frequency component, phase, or amplitude, making it less likely for listener L to feel a sense of incongruity and allowing listener L to experience a sense of realism. Stated differently, an acoustic signal processing method capable of providing listener L with a sense of realism is realized.

In the acoustic signal processing method according to Embodiment 1, the processing includes: determining, as the simulated information, a smooth function in which variation of the wind speed of wind W is simulated; and processing the sound data to change at least one of the frequency component, the phase, or the amplitude value of the waveform based on a value indicated by the smooth function determined.

This allows for the sound data to be processed based on the value indicated by the smooth function.

In the acoustic signal processing method according to Embodiment 1, the value indicated by the smooth function is information indicating a ratio between a wind speed of the aerodynamic sound as the reference sound and a wind speed of the aerodynamic sound indicated by the sound data after being processed in the processing.

This allows for the sound data to be processed based on the ratio between the wind speed of the aerodynamic sound as the reference sound and the wind speed of the aerodynamic sound indicated by the sound data after processing.

In the acoustic signal processing method according to Embodiment 1, in the processing, the smooth function is so determined as to irregularly change a parameter specifying the smooth function.

With this, listener L is able to hear aerodynamic sound in which irregularly changing fluctuations occur in at least one of the frequency component, phase, or amplitude, making it even less likely for listener L to feel a sense of incongruity and allowing listener L to experience an even greater sense of realism. Stated differently, an acoustic signal processing method capable of providing listener L with a greater sense of realism is realized.

In the acoustic signal processing method according to Embodiment 1, in the processing, the sound data is processed to shift the frequency component of the waveform to a frequency proportional to the value indicated by the smooth function determined.

With this, listener L is able to hear sound in which fluctuations occur in the frequency component, making it less likely for listener L to feel a sense of incongruity and allowing listener L to experience a sense of realism. Stated differently, an acoustic signal processing method capable of providing listener L with a sense of realism is realized.

That is, as illustrated in Operation Example 1, sound data (aerodynamic sound data) indicating the waveform of the reference sound is processed so that the frequency component of the waveform changes based on simulated information (smooth function) in which variation of wind speed of wind W including fluctuations has been simulated. Therefore, fluctuations occur in the frequency component of the processed aerodynamic sound data, and fluctuations also occur in the frequency component of the aerodynamic sound indicated by the processed aerodynamic sound data. Accordingly, listener L is able to hear such aerodynamic sound in which fluctuations occur in the frequency component, making it less likely for listener L to feel a sense of incongruity and allowing listener L to experience a sense of realism.

In the acoustic signal processing method according to Embodiment 1, in the processing, the sound data is processed to change the amplitude value of the waveform in proportion to the value indicated by the smooth function determined raised to a power of $\alpha$.

With this, listener L is able to hear sound in which fluctuations occur in the amplitude value, making it less likely for listener L to feel a sense of incongruity and allowing listener L to experience a sense of realism. Stated differently, an acoustic signal processing method capable of providing listener L with a sense of realism is realized.

That is, as illustrated in Operation Example 2, sound data (aerodynamic sound data) indicating the waveform of the reference sound is processed so that the amplitude value of the waveform changes in proportion to the value indicated by the smooth function, which is simulated information in which variation of wind speed of wind W including fluctuations has been simulated, raised to the power of a. Therefore, fluctuations occur in the amplitude value of the processed aerodynamic sound data, and fluctuations also occur in the amplitude value of the aerodynamic sound indicated by the processed aerodynamic sound data. Accordingly, listener L is able to hear such aerodynamic sound in which fluctuations occur in the amplitude value, making it less likely for listener L to feel a sense of incongruity and allowing listener L to experience a sense of realism.

In the acoustic signal processing method according to Embodiment 1, in the processing, the obtained sound data is divided into processing frames F of predetermined time, and the sound data is processed for each of the divided processing frames F.

Accordingly, an acoustic signal processing method with reduced computational processing load is realized.

In the acoustic signal processing method according to Embodiment 1, in the processing, the smooth function is so determined for each of the divided processing frames F as to cause a value of the smooth function to be 1.0 at a start time and an end time of processing frame F.

This inhibits the occurrence of noise at the junction between processing frame F and the next processing frame F thereof.

In the acoustic signal processing method according to Embodiment 1, in the processing, a parameter specifying the smooth function is determined for each of the divided processing frames F.

Accordingly, an acoustic signal processing method with reduced computational processing load is realized.

In the acoustic signal processing method according to Embodiment 1, the parameter is an amount of time from the start time to the end time.

This allows the parameter to be the time from the start time of processing frame F to the end time of processing frame F.

In the acoustic signal processing method according to Embodiment 1, the parameter is a value related to a maximum value of the smooth function.

This allows the parameter to be a value related to the maximum value of the smooth function.

In the acoustic signal processing method according to Embodiment 1, the parameter is a parameter that varies a position where the smooth function reaches a maximum value.

This allows the parameter to be a parameter that varies the position where the smooth function reaches its maximum value.

In the acoustic signal processing method according to Embodiment 1, the parameter is a parameter that varies a steepness of variation of the smooth function.

This allows the parameter to be a parameter that varies the steepness of variation of the smooth function.

In the acoustic signal processing method according to Embodiment 1, the processing includes: determining a first parameter and a second parameter that specify the smooth function; processing the sound data obtained to change at least one of the frequency component, the phase, or the amplitude value of the waveform based on the smooth function specified by the first parameter determined; and processing the sound data obtained to change at least one of the frequency component, the phase, or the amplitude value of the waveform based on the smooth function specified by the second parameter determined, and the outputting includes: outputting the sound data processed based on the smooth function specified by the first parameter determined to a first output channel; and outputting the sound data processed based on the smooth function specified by the second parameter determined to a second output channel.

This allows for different sound data to be output for each output channel.

In the acoustic signal processing method according to Embodiment 1, the aerodynamic sound is a sound generated by wind W colliding with an object, and in the processing, the parameter is determined to simulate a characteristic of the wind speed of wind W.

As a result, the parameter is determined to simulate the variation of wind speed of wind W including fluctuations. The sound data can be processed to change at least one of the frequency component, phase, or amplitude value of the waveform based on the smooth function specified by this parameter.

In the acoustic signal processing method according to Embodiment 1, the aerodynamic sound is a sound generated by wind W colliding with an ear of listener L who listens to the aerodynamic sound, and in the processing, the parameter is determined to simulate a characteristic of a wind direction of wind W.

As a result, the parameter is determined to simulate the variation of wind W direction including fluctuations. The sound data can be processed to change at least one of the frequency component, phase, or amplitude value of the waveform based on the smooth function specified by this parameter.

In the acoustic signal processing method according to Embodiment 1, a maximum value of the smooth function is 3 or less.

This allows the maximum value of the smooth function to be 3 or less.

In the acoustic signal processing method according to Embodiment 1, a minimum value of the smooth function is 0 or more.

This allows the minimum value of the smooth function to be 0 or greater.

The acoustic signal processing method according to Embodiment 1 further includes: receiving an instruction specifying Va and Vp, Va being the wind speed of wind W, Vp being a momentary wind speed of wind W. In the processing, the smooth function is so determined that a maximum value of the smooth function becomes Vp/Va.

This allows the maximum value of the smooth function to be Vp/Va.

In the acoustic signal processing method according to Embodiment 1, an average value of the predetermined time is 3 seconds.

This allows the average value of the predetermined time, which is the time length of processing frame F, to be 3 seconds.

In the acoustic signal processing method according to Embodiment 1, the object has a shape imitating an ear.

This makes it possible to, for example, record the aerodynamic sound using a dummy head microphone.

A computer program according to Embodiment 1 is for causing a computer to execute the acoustic signal processing method described above.

Accordingly, the computer can execute the acoustic signal processing method described above in accordance with the computer program.

Acoustic signal processing device 100 according to Embodiment 1 includes: obtainer 110 that obtains sound data indicating a waveform of a reference sound; processor 120 that processes the sound data to change at least one of a frequency component, a phase, or an amplitude value of the waveform based on simulated information in which variation of a natural phenomenon is simulated; and outputter 130 that outputs the processed sound data.

As a result, the sound data is processed to change at least one of the frequency component, phase, or amplitude value of the waveform, based on simulated information in which variation of natural phenomena including fluctuations is simulated. Therefore, in the processed sound data, fluctuations occur in at least one of the frequency component, phase, or amplitude, and fluctuations also occur in at least one of the frequency component, phase, or amplitude of the sound indicated by the processed sound data. Accordingly, listener L is able to hear sound in which fluctuations occur in at least one of the frequency component, phase, or amplitude value, making it less likely for listener L to feel a sense of incongruity and allowing listener L to experience a sense of realism. Stated differently, acoustic signal processing device 100 capable of providing listener L with a sense of realism is realized.

Other Embodiments

While an acoustic signal processing method and an acoustic signal processing device according to the present disclosure have been described above based on embodiments and variations, the present disclosure is not limited to these embodiments and variations. For example, other embodiments resulting from freely combining the elements described in the present specification or excluding some of the elements may be included as embodiments of the present disclosure. The present disclosure also encompasses variations that result from applying, to the embodiments and variations, various modifications that may be conceived by those skilled in the art without departing from the spirit of the present disclosure, that is, within a range that does not depart from the scope of the language of the claims.

The embodiments shown below may be included in the scope of one or more aspects of the present disclosure.

(1) One or more of the elements included in the acoustic signal processing device may be a computer system that includes a microprocessor, ROM, RAM, a hard disk unit, a display unit, a keyboard, and a mouse, for instance. A computer program is stored in RAM or the hard disk unit. The microprocessor achieves its functionality by operating in accordance with the computer program. Here, the computer program includes a combination of instruction codes indicating instructions to a computer in order to achieve predetermined functionality.

(2) One or more of the elements included in the acoustic signal processing device described above may include a single system large scale integration (LSI) circuit. System LSI circuit is ultra-multifunctional LSI circuit manufactured by integrating a plurality of processing units on a single chip, and specifically, is a computer system including a microprocessor, ROM, RAM and the like. RAM stores a computer program. The microprocessor operates according to the computer program, thereby enabling system LSI circuit to achieve its functionality.

(3) One or more of elements included in the acoustic signal processing device described above may include IC card or a standalone module which can be attached to or detached from the device. IC card or the module is a computer system including a microprocessor, ROM, RAM, and any other suitable elements. IC card or the module may be included in the above-described ultra-multifunctional LSI circuit. IC card or the module achieves its functionality by the microprocessor operating in accordance with the computer program. IC card or the module may be tamper resistant.

(4) One or more of the elements of the acoustic signal processing device described above may be a computer program or digital signal stored on a non-transitory computer-readable recording medium, examples of which include a flexible disk, a hard disk, CD-ROM, MO, DVD, DVD-ROM, DVD-RAM, Blu-ray (registered trademark) disc (BD), semiconductor memory, and other media. Alternatively, one or more of the elements may be realized as a digital signal stored in such a recording medium.

One or more of the elements of the acoustic signal processing device described above may be realized by transmitting the computer program or digital signal over an electrical communication line, a wireless or wired communication line, a network typified by the Internet, or via data broadcasting, for instance.

(5) The present disclosure may be a method described above. The present disclosure may be a computer program that realizes such a method using a computer or a digital signal that includes the computer program.

(6) The present disclosure may be a computer system that includes a microprocessor and memory, the memory may store the computer program, and the microprocessor may operate in accordance with the computer program.

(7) The present disclosure may be implemented by another independent computer system by recording the program or the digital signal on the recording medium and transferring it, or by transferring the program or the digital signal via the network or the like.

[Industrial Applicability]

The present disclosure is applicable to an acoustic signal processing method and an acoustic signal processing device, and is particularly applicable to acoustic systems and the like.

[Reference Signs List]

100, 100a acoustic signal processing device
110 obtainer
120, 120a processor
121 first processor
122, 122b second processor
130 outputter
140 storage
150 input interface
200 headphones
201 head sensor
202 outputter
300 display
500 server device
600 information processing device
610 circular address unit
620 frequency shifter
630 storage
640 interval specifier
650 crossfader
660 readout controller
900 renderer
901 reverberation processor
902 early reflection processor
903 distance attenuation processor
904 selector
905 binaural processor
906 calculator
907 generator
1001 sampling rate converter
1002 rearranger
1003 connector
1021 up-sampler
1022 low-pass filter
1023 down-sampler
1024 XY setter
1031 amplitude adjuster
A1 first interval
A2 second interval
A3 interval
A0000 three-dimensional sound reproduction system
A0001 acoustic signal processing device
A0002 audio presentation device
A0100 encoding device
A0101 input data
A0102 encoder
A0103 encoded data
A0104 memory
A0110 decoding device
A0111 audio signal
A0112 decoder
A0113 input data
A0114 memory
A0120 encoding device
A0121 transmitter

A0122transmission signal
A0130decoding device
A0131 receiver
A0132reception signal
A0200decoder
A0201spatial information manager
A0202audio data decoder
A0203 renderer
A0210decoder
A0211 spatial information manager
A0213 renderer
D1 aerodynamic sound data before processing
D11 aerodynamic sound data after processing
FN electric fan
F, F1, F2, F3, F4, F5, F6, Fn, Fn+1 processing frame
L listener
Pt1 first pointer
Pt2 second pointer

**Claims**

1. An acoustic signal processing method comprising:

    obtaining sound data indicating a waveform of a reference sound;
    processing the sound data to change at least one of a frequency component, a phase, or an amplitude value of the waveform based on simulated information in which variation of a natural phenomenon is simulated; and
    outputting the sound data processed.

2. The acoustic signal processing method according to claim 1, wherein

    the reference sound is an aerodynamic sound generated by wind, and
    in the processing, the sound data is processed to change at least one of the frequency component, the phase, or the amplitude value of the waveform based on the simulated information in which variation of wind speed of the wind is simulated.

3. The acoustic signal processing method according to claim 2, wherein
    the processing includes:

    determining, as the simulated information, a smooth function in which variation of the wind speed of the wind is simulated; and
    processing the sound data to change at least one of the frequency component, the phase, or the amplitude value of the waveform based on a value indicated by the smooth function determined.

4. The acoustic signal processing method according to claim 3, wherein
    the value indicated by the smooth function is information indicating a ratio between a wind speed of the aerodynamic sound as the reference sound and a wind speed of the aerodynamic sound indicated by the sound data after being processed in the processing.

5. The acoustic signal processing method according to claim 4, wherein
    in the processing, the smooth function is so determined as to irregularly change a parameter specifying the smooth function.

6. The acoustic signal processing method according to claim 3, wherein
    in the processing, the sound data is processed to shift the frequency component of the waveform to a frequency proportional to the value indicated by the smooth function determined.

7. The acoustic signal processing method according to claim 3, wherein

in the processing, the sound data is processed to change the amplitude value of the waveform in proportion to the value indicated by the smooth function determined raised to a power of a.

8. The acoustic signal processing method according to claim 4, wherein
in the processing, the sound data obtained is divided into processing frames of predetermined time, and the sound data is processed for each of the processing frames divided.

9. The acoustic signal processing method according to claim 8, wherein
in the processing, the smooth function is so determined for each of the processing frames divided as to cause a value of the smooth function to be 1.0 at a start time and an end time of the processing frame.

10. The acoustic signal processing method according to claim 9, wherein
in the processing, a parameter specifying the smooth function is determined for each of the processing frames divided.

11. The acoustic signal processing method according to claim 10, wherein
the parameter is an amount of time from the start time to the end time.

12. The acoustic signal processing method according to claim 10, wherein
the parameter is a value related to a maximum value of the smooth function.

13. The acoustic signal processing method according to claim 10, wherein
the parameter is a parameter that varies a position where the smooth function reaches a maximum value.

14. The acoustic signal processing method according to claim 10, wherein
the parameter is a parameter that varies a steepness of variation of the smooth function.

15. The acoustic signal processing method according to claim 10, wherein

the processing includes:

determining a first parameter and a second parameter that specify the smooth function;
processing the sound data obtained to change at least one of the frequency component, the phase, or the amplitude value of the waveform based on the smooth function specified by the first parameter determined; and
processing the sound data obtained to change at least one of the frequency component, the phase, or the amplitude value of the waveform based on the smooth function specified by the second parameter determined, and

the outputting includes:

outputting the sound data processed based on the smooth function specified by the first parameter determined to a first output channel; and
outputting the sound data processed based on the smooth function specified by the second parameter determined to a second output channel.

16. The acoustic signal processing method according to claim 10, wherein

the aerodynamic sound is a sound generated by the wind colliding with an object, and
in the processing, the parameter is determined to simulate a characteristic of the wind speed of the wind.

17. The acoustic signal processing method according to claim 10, wherein

the aerodynamic sound is a sound generated by the wind colliding with an ear of a listener who listens to the aerodynamic sound, and
in the processing, the parameter is determined to simulate a characteristic of a wind direction of the wind.

18. The acoustic signal processing method according to claim 8, wherein
a maximum value of the smooth function is 3 or less.

**19.** The acoustic signal processing method according to claim 8, wherein
a minimum value of the smooth function is 0 or more.

**20.** The acoustic signal processing method according to claim 8, further comprising:

receiving an instruction specifying Va and Vp, Va being the wind speed of the wind, Vp being a momentary wind speed of the wind, wherein
in the processing, the smooth function is so determined that a maximum value of the smooth function becomes Vp/Va.

**21.** The acoustic signal processing method according to claim 8, wherein
an average value of the predetermined time is 3 seconds.

**22.** The acoustic signal processing method according to claim 16, wherein
the object has a shape imitating an ear.

**23.** A computer program for causing a computer to execute the acoustic signal processing method according to any one of claims 1 to 22.

**24.** An acoustic signal processing device comprising:

an obtainer that obtains sound data indicating a waveform of a reference sound;
a processor that processes the sound data to change at least one of a frequency component, a phase, or an amplitude value of the waveform based on simulated information in which variation of a natural phenomenon is simulated; and
an outputter that outputs the sound data processed.

**Amended claims under Art. 19.1 PCT**

**1.** An acoustic signal processing method comprising:

obtaining sound data indicating a waveform of a reference sound;
processing the sound data to change at least one of a frequency component, a phase, or an amplitude value of the waveform based on simulated information in which variation of a natural phenomenon is simulated; and
outputting the sound data processed.

**2.** The acoustic signal processing method according to claim 1, wherein

the reference sound is an aerodynamic sound generated by wind, and
in the processing, the sound data is processed to change at least one of the frequency component, the phase, or the amplitude value of the waveform based on the simulated information in which variation of wind speed of the wind is simulated.

**3.** The acoustic signal processing method according to claim 2, wherein
the processing includes:

determining, as the simulated information, a smooth function in which variation of the wind speed of the wind is simulated; and
processing the sound data to change at least one of the frequency component, the phase, or the amplitude value of the waveform based on a value indicated by the smooth function determined.

**4.** The acoustic signal processing method according to claim 3, wherein the value indicated by the smooth function is information indicating a ratio between a wind speed of the aerodynamic sound as the reference sound and a wind speed of the aerodynamic sound indicated by the sound data after being processed in the processing.

**5.** (Currently amended) The acoustic signal processing method according to claim 43, wherein
in the processing, the smooth function is so determined as to irregularly change a parameter specifying the smooth function.

41

**6.** The acoustic signal processing method according to claim 3, wherein
in the processing, the sound data is processed to shift the frequency component of the waveform to a frequency proportional to the value indicated by the smooth function determined.

**7.** The acoustic signal processing method according to claim 3, wherein
in the processing, the sound data is processed to change the amplitude value of the waveform in proportion to the value indicated by the smooth function determined raised to a power of a.

**8.** The acoustic signal processing method according to claim 4, wherein
in the processing, the sound data obtained is divided into processing frames of predetermined time, and the sound data is processed for each of the processing frames divided.

**9.** The acoustic signal processing method according to claim 8, wherein
in the processing, the smooth function is so determined for each of the processing frames divided as to cause a value of the smooth function to be 1.0 at a start time and an end time of the processing frame.

**10.** The acoustic signal processing method according to claim 9, wherein
in the processing, a parameter specifying the smooth function is determined for each of the processing frames divided.

**11.** The acoustic signal processing method according to claim 10, wherein
the parameter is an amount of time from the start time to the end time.

**12.** The acoustic signal processing method according to claim 10, wherein
the parameter is a value related to a maximum value of the smooth function.

**13.** The acoustic signal processing method according to claim 10, wherein
the parameter is a parameter that varies a position where the smooth function reaches a maximum value.

**14.** The acoustic signal processing method according to claim 10, wherein
the parameter is a parameter that varies a steepness of variation of the smooth function.

**15.** The acoustic signal processing method according to claim 10, wherein

the processing includes:

determining a first parameter and a second parameter that specify the smooth function;
processing the sound data obtained to change at least one of the frequency component, the phase, or the amplitude value of the waveform based on the smooth function specified by the first parameter determined; and
processing the sound data obtained to change at least one of the frequency component, the phase, or the amplitude value of the waveform based on the smooth function specified by the second parameter determined, and

the outputting includes:

outputting the sound data processed based on the smooth function specified by the first parameter determined to a first output channel; and
outputting the sound data processed based on the smooth function specified by the second parameter determined to a second output channel.

**16.** The acoustic signal processing method according to claim 10, wherein

the aerodynamic sound is a sound generated by the wind colliding with an object, and
in the processing, the parameter is determined to simulate a characteristic of the wind speed of the wind.

**17.** The acoustic signal processing method according to claim 10, wherein

the aerodynamic sound is a sound generated by the wind colliding with an ear of a listener who listens to the aerodynamic sound, and

in the processing, the parameter is determined to simulate a characteristic of a wind direction of the wind.

18. The acoustic signal processing method according to claim 8, wherein
a maximum value of the smooth function is 3 or less.

19. The acoustic signal processing method according to claim 8, wherein
a minimum value of the smooth function is 0 or more.

20. The acoustic signal processing method according to claim 8, further comprising:

receiving an instruction specifying Va and Vp, Va being the wind speed of the wind, Vp being a momentary wind speed of the wind, wherein
in the processing, the smooth function is so determined that a maximum value of the smooth function becomes Vp/Va.

21. The acoustic signal processing method according to claim 8, wherein
an average value of the predetermined time is 3 seconds.

22. The acoustic signal processing method according to claim 16, wherein
the object has a shape imitating an ear.

23. (Cancelled)

24. An acoustic signal processing device comprising:

an obtainer that obtains sound data indicating a waveform of a reference sound;
a processor that processes the sound data to change at least one of a frequency component, a phase, or an amplitude value of the waveform based on simulated information in which variation of a natural phenomenon is simulated; and
an outputter that outputs the sound data processed.

25. (New) The acoustic signal processing method according to claim 3, wherein
a parameter that specifies the smooth function is determined according to information on wind speed including momentary wind speed.

26. (New) The acoustic signal processing method according to claim 3, wherein

in the processing, the smooth function is determined based on two or more parameters that change irregularly, and
one or more parameters among the two or more parameters indicate information related to wind speed.

27. (New) The acoustic signal processing method according to claim 26, wherein

in the processing, the sound data obtained is divided into processing frames of predetermined time, and the sound data is processed for each of the processing frames divided, and
one or more parameters among the two or more parameters indicate information related to a length of the processing frames.

28. (New) The acoustic signal processing method according to claim 3, wherein
the processing includes:

dividing the sound data obtained into processing frames of predetermined time, and processing the sound data for each of the processing frames divided; and
determining a parameter specifying the smooth function for each of the processing frames divided.

29. (New) A computer program for causing a computer to execute the acoustic signal processing method according to any one of claims 1 to 22 and 25 to 28.

**Statement under Art. 19.1 PCT**

International Application No.: PCT/JP2023/036007

International Filing Date: 03.10.2023

Applicant:

Name : Panasonic Intellectual Property Corporation of America
Address : 2050 W 190th Street Suite 450, Torrance, CA 90504 U.S.A.

Agent:

Name: NII, Hiromori
Address: c/o NII Patent Firm, 6F, Ito Pia Shin-Osaka Bldg., 3-10, Nishi Nakajima 5-chome, Yodogawa-ku, Osaka-city, Osaka 532-0011, Japan

Applicant's or Agent's File reference: P1050577WO01

Dear Sir/Madam

The Applicant who received the International Search Report sent on December 26, 2023 pertaining to the above international application submits amendments under Article 19 (1) as per the attached document.

The Applicant amended claim 5, canceled claim 23, and added claims 25 to 29.

Amended claim 5 is a claim that changes its dependency, and is a claim based on the descriptions in paragraphs [0285], [0293], and [0296].

Pre-amendment claim 23 has been canceled.

New claim 25 is a claim based on the descriptions in paragraphs [0299] to [0304].

New claim 26 is a claim based on the descriptions in paragraphs [0225], [0226], [0285], [289] to [293], [296], and [297].

New claim 27 is a claim based on claim 8 and the descriptions in paragraphs [0283] and [0306], as well as FIG. 19 and (b) in FIG. 21.

New claim 28 is a claim that adds pre-amendment claim 8 to pre-amendment claim 10, changes its dependency, and is a claim based on the descriptions in paragraphs [0282] to [0286].

New claim 29 is based on pre-amendment claim 23 and the description in paragraph [0065]. Accordingly, pre-amendment claim 23 has been canceled as described above.

Very truly yours,

Hiromori NII Patent Attorney

Attachment:

Amendment under Article 19 (1) 5 sheets

# FIG. 1

A0000

Three-dimensional sound reproduction system

Acoustic signal processing device

Audio presentation device
A0002

A0001

EP 4 607 964 A1

# FIG. 2

A0102

A0104

A0101 → Encoder

A0103 →

Memory

Encoding device

A0100

# FIG. 3

A0112

A0114

← A0111

Decoder

← A0113

Memory

Decoding device

A0110

FIG. 4

FIG. 5

## FIG. 6

## FIG. 7

# FIG. 8

Acoustic signal processing device

Loudspeaker · Processor · Communication I/F

Memory · Sensor

# FIG. 9

Encoding device

Processor · Communication I/F

Memory

FIG. 10

Acoustic signal processing device (100)

Server device (500) → Obtainer (110) ← Head sensor (201)

Obtainer (110) → Processor (120)

Processor (120) → Display (300)

Processor (120) → Outputter (130)

Outputter (130) → Headphones (200)

Storage (140)

Input interface (150)

Headphones (200): Head sensor (201), Outputter (202)

FIG. 11

EP 4 607 964 A1

FIG. 12

FIG. 13

EP 4 607 964 A1

# FIG. 14

```
START
```

S10

Accept input operation indicating that simulated information is smooth function in which variation of wind speed has been simulated

S20

Obtain sound data indicating waveform of reference sound (aerodynamic sound generated by wind)

S30

Determine, as simulated information in which variation due to natural phenomena has been simulated, smooth function in which variation of wind speed has been simulated

S40

Process sound data to change at least one of frequency component, phase, or amplitude value of waveform based on value (ratio) indicated by smooth function

S50

Output processed sound data

```
END
```

# FIG. 15

(a)

Amplitude

Smooth function

1.5
1.0
0.5
t = 0

D1

(b)

Black dot interval

P1

B1

0.5

0.4999

0.4998

1.5
1.0
0.5

Time t

Smooth function

1   1   1   1

B11

t1

D11

D1

FIG. 16

FIG. 17

# FIG. 18

FIG. 19

EP 4 607 964 A1

FIG. 20

FIG. 21

## FIG. 22

EP 4 607 964 A1

# FIG. 23

# FIG. 24

# FIG. 25

EP 4 607 964 A1

# FIG. 26

(a) Sound data processing frame Fn P = 0.5

1/Fs

(b) After sampling rate conversion

1/2Fs

(c)

After rearrangement

1/Fs

Windowed addition

⊕

(d)

Sound data processing frame Fn+1 P = 0.75

1/Fs

Processed sound data

EP 4 607 964 A1

EP 4 607 964 A1

## FIG. 27

## FIG. 28

FIG. 29

EP 4 607 964 A1

# FIG. 30

600

Information processing device

610

Circular address unit

620

Frequency shifter

630

Storage

640

Interval specifier

650

Crossfader

660

Readout controller

EP 4 607 964 A1

# FIG. 31

(a)

Aerodynamic sound data — Conventional storage

Circulate through addresses

(b)

N samples

(N−2M) samples

M samples | (N−2M) samples | M samples

Aerodynamic sound data

Pre-crossfade

Aerodynamic sound data — Storage

M samples | (N−2M) samples

# FIG. 32

(a)

Pt1

Pt2

Aerodynamic sound data — Storage

A1  A2  A3

(b)

First pointer Pt1

Circulate

(c)

Second pointer Pt2

Circulate

# FIG. 33

(a) State 1 | Aerodynamic sound data — Storage

A2

End point of second interval A2

(b) State 2

Next first interval A1

Interval A3 that moves in conjunction with next first interval A1

(c) State 3

Pt1

Pt2

(d) State 1

Next second interval A2

End point of second interval A2

(e) State 2

Interval A3 that moves in conjunction with next first interval A1

Next first interval A1

(f) State 3

Pt2

Pt1

(g) State 1

Next second interval A2

# FIG. 34

900

**Renderer**

901

Reverberation processor

902

Early reflection processor

903

Distance attenuation processor

904

Selector

906

Calculator

907

Generator

905

Binaural processor

## INTERNATIONAL SEARCH REPORT

International application No.

**PCT/JP2023/036007**

| | |
|---|---|
| **A.** | **CLASSIFICATION OF SUBJECT MATTER** |

*H04S 7/00*(2006.01)i
FI:    H04S7/00 300

According to International Patent Classification (IPC) or to both national classification and IPC

| | |
|---|---|
| **B.** | **FIELDS SEARCHED** |

Minimum documentation searched (classification system followed by classification symbols)

H04S7/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| X | CN 110972053 A (TENCENT MUSIC ENTERTAINMENT TECHNOLOGY (SHENZHEN) CO., LTD.) 07 April 2020 (2020-04-07) paragraph [0167] | 1-3, 23, 24 |
| A | entire text, all drawings | 4-22 |
| A | WO 2020/255810 A1 (SONY CORPORATION) 24 December 2020 (2020-12-24) entire text, all drawings | 1-24 |

☐ Further documents are listed in the continuation of Box C.     ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 December 2023** | **26 December 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2023/036007**

| Patent document cited in search report | | | Publication date (day/month/year) | Patent family member(s) | | | Publication date (day/month/year) |
|---|---|---|---|---|---|---|---|
| CN | 110972053 | A | 07 April 2020 | US | 2022/0286781 | A1 | |
| WO | 2020/255810 | A1 | 24 December 2020 | US | 2022/0360931 | A1 | |
| | | | | entire text, all drawings | | | |
| | | | | EP | 3989605 | A1 | |
| | | | | CN | 113994716 | A | |
| | | | | KR | 10-2022-0023348 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 19982151162 A

- WO 2021180938 A

**Non-patent literature cited in the description**

- **YOSHINORI DOBASHI et al.** Real-time rendering of aerodynamic sound using sound textures based on computational fluid dynamics. *ACM Transactions on Graphics*, vol. 22 (3), 732-740